# EUROPEAN PATENT APPLICATION

(11) **EP 2 421 116 A2**
(43) Date of publication of application: **22.02.2012**
(21) Application number: 11006655.2
(22) Date of filing: 12.08.2011
(51) Int. Cl.: H02J 7/02

(54) **Device housing a battery and charging apparatus for contactless charging**

(30) Priority: 18.08.2010 JP 2010183218; 14.06.2011 JP 2011132742
(71) Applicant: Sanyo Electric Co., Ltd., Osaka 570-8677 (JP)
(72) Inventor: Terao, Kyozo, Moriguchi-shi Osaka 570-8677 (JP); Itagaki, Shinichi, Moriguchi-shi Osaka 570-8677 (JP); Minami, Sadao, Moriguchi-shi Osaka 570-8677 (JP)
(74) Representative: Hertz, Oliver

(57) **Abstract**

A device housing a battery has charging terminals (72) for connection of a charging adapter (80) and a contactless charging section (60). A charging apparatus performs contactless charging of the device housing a battery placed on the charging apparatus. The device housing a battery is provided with a charging apparatus detection section (61) that detects placement on the charging apparatus, an adapter detection section (62) that detects charging adapter (80) connection or charging, and a charging selection section (63) that selects internal battery (52) charging by either the charging apparatus or the charging adapter (80). When the device housing a battery is placed on the charging apparatus and the charging adapter (80) is connected, the charging selection section (63) controls either the charging apparatus or the charging adapter (80) to charge the internal battery (52).

## Description

### BACKGROUND OF THE INVENTION

### 1. Field of the Invention

The present invention relates to a device housing a battery (batteries) such as a battery pack or mobile telephone, and to a charging apparatus that transmits power by magnetic induction to the device housing a battery to charge the battery inside.

### 2. Description of the Related Art

A contactless charging pad (charging stand, charging cradle) has been developed to charge a battery inside a device housing a battery such as a battery pack or a notebook computer. Battery charging is performed by transmitting power from a power supply coil (transmitting coil, primary coil) to an induction coil (receiving coil, secondary coil) by magnetic induction (refer to Japanese Laid-Open Patent Publication 2005-110409).

JP 2005-110409-A cites a configuration with a contactless charging pad that houses a power supply coil driven by an alternating current (AC) power source, and a device housing a battery such as a battery pack or a notebook computer that contains an induction coil, which magnetically couples with the power supply coil. The contactless charging pad disposes the power supply coil opposite the induction coil in the device housing a battery enabling the internal battery to be charged.

It turns out there are devices housing a battery equipped with charging terminals to connect a charging adapter and charge the internal battery without necessarily depending on the contactless charging pad. If this type of device is placed on the contactless charging pad while connected to the charging adapter, the internal battery is charged by both the charging adapter and the contactless charging pad. However, the contactless charging pad is designed to independently charge the internal battery with optimal current and voltage, and the charging adapter as well is designed to independently charge the internal battery with optimal current and voltage. Consequently, if the internal battery is charged by both the contactless charging pad and the charging adapter, the battery cannot be charged normally.

To resolve this drawback, a charging system has been developed that suspends charging by the charging adapter when the charging adapter is connected to a device housing a battery that is being charged by the contactless charging pad.

Refer to Patent No. 4435788.

The charging system of Patent No. 4435788 detects battery charging current induced from the contactless charging pad to determine if the internal battery is being charged by the contactless charging pad. If the charging adapter is connected to the device housing a battery when it is being charged by the contactless charging pad, the charging circuit that charges the internal battery from the charging adapter does not perform charging. Therefore, when the device housing a battery is placed on the contactless charging pad, the internal battery is charged only by the contactless charging pad.

The charging system described above does not simultaneously charge the device battery with both the contactless charging pad and the charging adapter. However, since charging by the charging adapter is halted when contactless charging pad battery charging current is detected, rapid charging of the internal battery under optimal conditions may not always be possible. For example, the system has the drawback that even under conditions where the internal battery can be rapidly charged by the charging adapter, charging with the charging adapter may not be possible.

The present invention was developed with the object of correcting the drawbacks described above. Thus, it is a primary object of the present invention to provide a device housing a battery and charging apparatus that detect the charging status of both a charging adapter and the charging apparatus, which is an apparatus such as a contactless charging pad that charges the device battery without wire contact, and select optimum charging apparatus and charging adapter charging to consistently enable internal battery charging under favorable conditions.

### SUMMARY OF THE INVENTION

The device housing a battery and charging apparatus of the present invention are provided with a device housing a battery 50, 150, and a charging apparatus 10, 110 that performs contactless charging by magnetically coupling with a device housing a battery 50, 150 placed on the charging apparatus 10, 110. The device housing a battery 50, 150 has an internal battery 52, 152, charging terminals 72, 172 that connect with a charging adapter 80, 180 to charge the internal battery 52, 152, and a contactless charging section 60 for contactless charging of the internal battery 52, 152 by magnetically coupling with the charging apparatus 10, 110. The device housing a battery 50, 150 is provided with a charging apparatus detection section 61 that detects placement on the charging apparatus 10, 110, an adapter detection section 62 that detects charging adapter 80, 180 connection or charging, and a charging selection section 63 that selects internal battery 52, 152 charging by either the charging apparatus 10, 110 or the charging adapter 80, 180 according to signals from the charging apparatus detection section 61 and the adapter detection section 62. When the device housing a battery 50, 150 is placed on the charging apparatus 10, 110 and the charging adapter 80, 180 is connected, the charging selection section 63 controls either the charging apparatus 10, 110 or the charging adapter 80, 180 to charge the internal battery 52, 152.

The device housing a battery and charging apparatus described above has the characteristic that both contactless charging apparatus and charging adapter charging or connection are detected, and optimum contactless charging apparatus and charging adapter charging is selected to consistently enable internal battery charging under favorable conditions. This is because the device housing a battery detects contactless charging and charging adapter charging and charges the internal battery in an optimal manner.

In the device housing a battery and charging apparatus of the present invention, when the device housing a battery 50, 150 is placed on the charging apparatus 10, 110 and the charging adapter 80, 180 is connected, the charging selection section 63 can charge the internal battery 52, 152 with only the charging adapter 80, 180 output. This device housing a battery has the characteristic that when it is placed on the contactless charging apparatus with the charging adapter connected, the internal battery can be rapidly charged under favorable conditions while limiting heat generation.

In the device housing a battery and charging apparatus of the present invention, the device housing a battery 50, 150 can be provided with a charging apparatus detection section 61 equipped with a microcomputer 64 that is operated by power output from the contactless charging section 60 to control contactless charging of the internal battery 52, 152. With the microcomputer 64 in the operating state due to power supplied from the charging apparatus 10, 110, the charging status of the charging apparatus 10, 110 can be detected by the charging apparatus detection section 61. In this device housing a battery, the microcomputer, which is provided in the charging apparatus detection section to control internal battery charging, is not operated by the internal battery. Specifically, the charging status of the charging apparatus can be detected with a simple circuit structure while reducing unnecessary internal battery power consumption. This is because the microcomputer is operated by power supplied via magnetic coupling with the charging apparatus to detect the charging status of the charging apparatus.

In the device housing a battery and charging apparatus of the present invention, the adapter detection section 62 can detect charging adapter 80, 180 connection or charging when contactless charging is halted and at least one of the following parameters is detected: voltage of a switching device 78A, which is a protection device 78 for the internal battery 52, 152 inside the device housing a battery 50, 150; voltage of the internal battery 52, 152; voltage of a temperature sensor 59 inside the device housing a battery 50, 150; signal input from the charging adapter 80, 180; voltage rise in the internal battery 52, 152; and temperature rise in the internal battery 52, 152. In this device housing a battery, when contactless charging is halted and the voltage drop across the switching device exceeds a set value, the adapter detection section can judge that the charging adapter is connected. This is because charging current from the charging adapter flows through the switching device generating a voltage drop. When contactless charging is halted, the adapter detection section can detect internal battery voltage. If internal battery voltage drops, the adapter detection section can judge that the charging adapter is not connected, and if internal battery voltage does not drop, the adapter detection section can judge that the charging adapter is connected. This is because the voltage of the internal battery rises when it is being charged. Further, the adapter detection section can detect the voltage of the temperature sensor in the device housing a battery to judge charging adapter connection. This is because voltage is applied to the temperature sensor from the charging adapter when it is connected. Further, the adapter detection section can input a (charging) signal from the charging adapter to judge charging adapter connection. Further, since internal battery voltage rises when it is being charged, the adapter detection section can judge charging adapter connection from internal battery voltage rise. Further, since internal battery temperature rises when it is being charged, the adapter detection section can judge charging adapter connection from internal battery temperature rise.

In the device housing a battery and charging apparatus of the present invention, the device housing a battery 50, 150 can be provided with a timer 67 to set a time period to halt charging by the charging apparatus 10, 110, and the adapter detection section 62 can detect charging adapter 80, 180 connection or charging during the set time period. In this device housing a battery, since contactless charging is temporarily halted with the device housing a battery placed on the charging apparatus, charging adapter connection can be reliably detected during that time period when contactless charging is halted. This is because parameters such as internal battery voltage, current, temperature, and temperature sensor voltage change depending on whether or not charging is being performed by the charging adapter.

In the device housing a battery and charging apparatus of the present invention, the adapter detection section 62 can be provided with a first charging current detection circuit 68 that detects internal battery 52, 152 charging current, and a second charging current detection circuit 69 that detects charging current output from the charging apparatus 10, 110. Further, the adapter detection section 62 can detect charging by the charging adapter 80, 180 from the difference between the charging current detected by the first charging current detection circuit 68 and the second charging current detection circuit 69. This device housing a battery can reliably determine if the charging adapter is connected by the current difference between the first charging current detection circuit and the second charging current detection circuit.

The device housing a battery and charging apparatus of the present invention can be provided with a diode 75 between the charging adapter 80, 180 and the internal battery 52, 152, and the adapter detection section 62 can detect the adapter-side diode 75 voltage to detect charging by the charging adapter 80, 180. This device housing a battery can reliably detect charging from the charging adapter with a simple circuit structure.

In the device housing a battery and charging apparatus of the present invention, the adapter detection section 62 can detect charging adapter 80, 180 connection or charging, and send a signal to the charging apparatus 10, 110 to halt charging, or stop internal battery 52, 152 charging by the contactless charging section 60. In this device housing a battery, since power transmission from the charging apparatus can be stopped when the charging adapter is connected and charging the internal battery, unnecessary power consumption can be reduced and the internal battery can be efficiently charged. Further, when not charging the internal battery, charging apparatus power transmission can be stopped to prevent heat generation due to magnetic induction in the device housing a battery and the internal battery.

In the device housing a battery and charging apparatus of the present invention, the adapter detection section 62 (equivalent to an external power source detection section 242) is provided with an adapter detection circuit 242C activated by voltage applied by connecting the charging adapter 80 (equivalent to an external power source 220), and the adapter detection circuit 242C issues a connection signal to the adapter detection section 62 to detect charging adapter 80 connection. This device housing a battery can detect charging adapter 80 connection with a simple structure.

In the device housing a battery and charging apparatus of the present invention, the adapter detection circuit 242C has a switching device SW connected between the adapter detection section 62 (equivalent to the external power source detection section 242) input port I and ground, and the switching device SW is activated by voltage applied by connecting the charging adapter 80 (equivalent to the external power source 220). Voltage application due to charging adapter 80 connection puts the switching device SW in a conducting state, and a LOW voltage level is applied as a connection signal at the input port I to detect charging adapter 80 connection. This device housing a battery can detect charging adapter 80 connection with a simple structure. The above and further objects of the present invention as well as the features thereof will become more apparent from the following detailed description to be made in conjunction with the accompanying drawings.

### BRIEF DESCRIPTION OF THE DRAWINGS

Fig. 1 is an oblique view of a device housing a battery and charging apparatus for an embodiment of the present invention;
Fig. 2 is an abbreviated oblique view showing the internal structure of the charging apparatus shown in Fig. 1;
Fig. 3 is a horizontal cross-section view showing the internal structure of the charging apparatus shown in Fig. 1;
Fig. 4 is a lengthwise vertical cross-section view of the charging apparatus shown in Fig. 3;
Fig. 5 is a widthwise vertical cross-section view of the charging apparatus shown in Fig. 3;
Fig. 6 is a circuit diagram showing one example of a charging apparatus position detection controller;
Fig. 7 is a block diagram of a device housing a battery and charging apparatus for an embodiment of the present invention;
Fig. 8 is a circuit diagram of the device housing a battery shown in Fig. 7;
Fig. 9 is a waveform diagram showing an example of an echo signal output from the induction coil excited by a position detection signal;
Fig. 10 is a graph showing oscillation frequency as a function of the relative positional offset of the power supply coil and the induction coil;
Fig. 11 is an oblique view of a device housing a battery and charging apparatus for another embodiment of the present invention;
Fig. 12 is an abbreviated cross-section view illustrating charging of the battery in the device housing a battery shown in Fig. 11;
Fig. 13 is a block diagram of the device housing a battery and charging apparatus shown in Fig.11;
Fig. 14 is a circuit diagram showing the position detection controller of the charging apparatus shown in Fig. 11;
Fig. 15 is a block diagram of a battery pack for an embodiment of the present invention; and
Fig. 16 is a block diagram showing a battery pack placed on a charging pad for an embodiment of the present invention.

### DETAILED DESCRIPTION OF THE EMBODIMENT(S)

The following describes embodiments of the present invention based on the figures. However, the following embodiments are merely specific examples of a device housing a battery and charging apparatus representative of the technology associated with the present invention, and the device housing a battery and charging apparatus of the present invention are not limited to the embodiments described below. Further, components indicated in the appended claims are in no way limited to the components indicated in the embodiments.

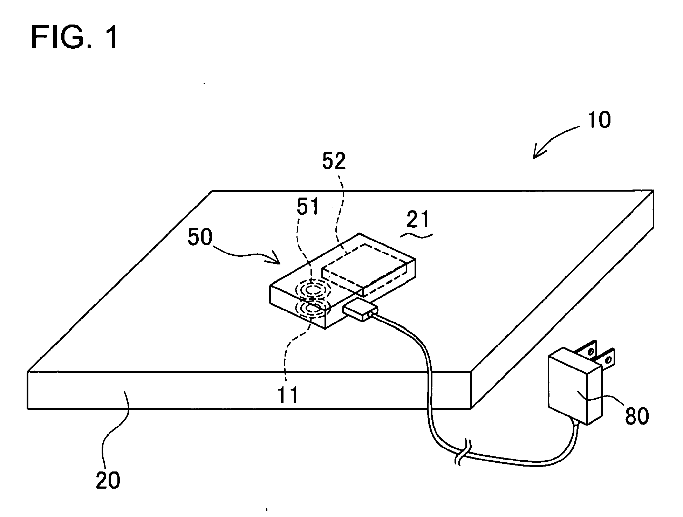

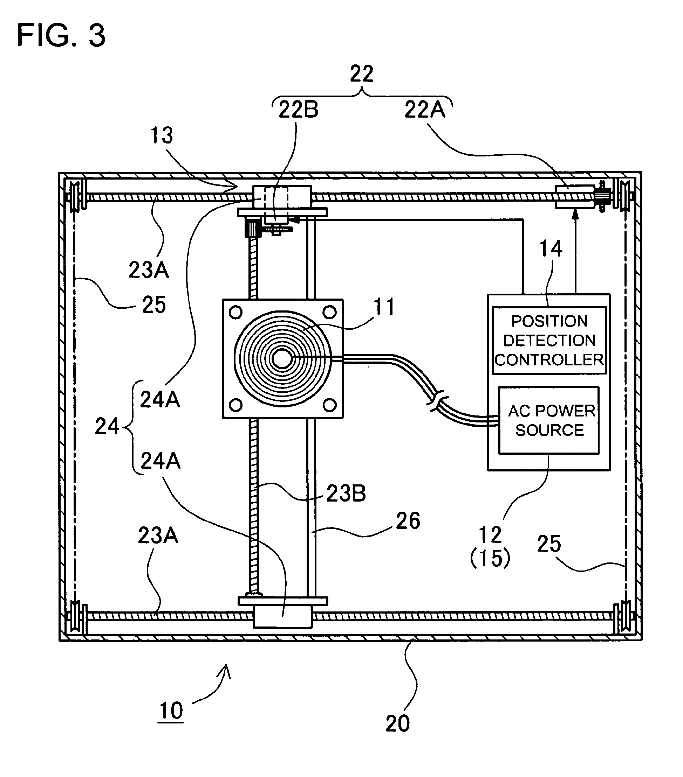

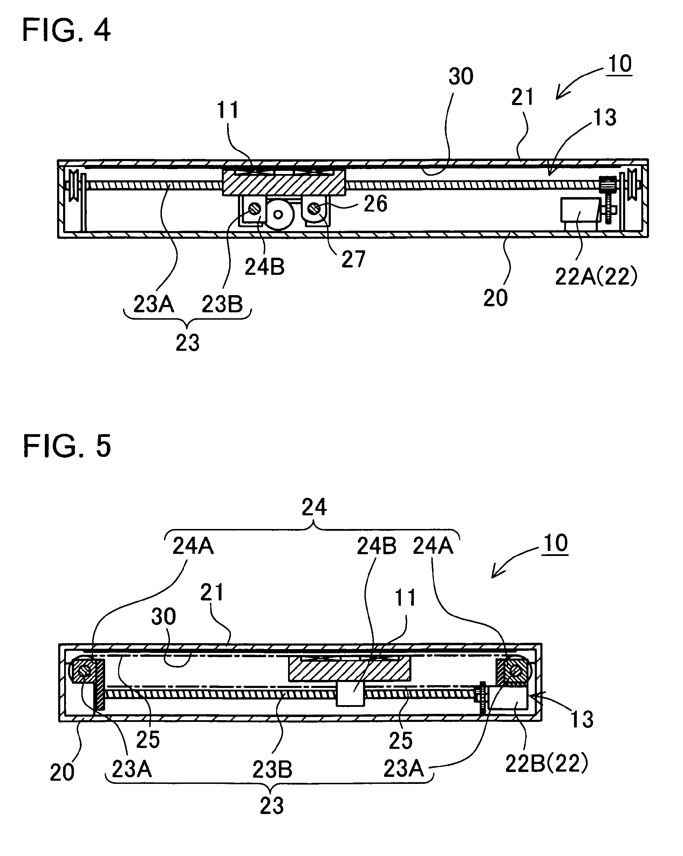

Figs. 1-7 show structural overviews and diagrams illustrating the operating principles of the charging apparatus 10. As shown in Figs. 1, 2, and 7, a device housing a battery 50 is placed on top of the charging apparatus 10 and power is transmitted by magnetic induction to charge the internal battery 52. The device housing a battery 50 is provided with an internal battery 52, charging terminals 72 that connect with a charging adapter 80 that charges the internal battery 52, and a contactless charging section 60 that charges the internal battery 52 in a contactless manner by magnetic coupling. The contactless charging section 60 is provided with an induction coil 51 that magnetically couples with a power supply coil 11 in the charging apparatus 10, and the internal battery 52 is charged by power induced in the induction coil 51.

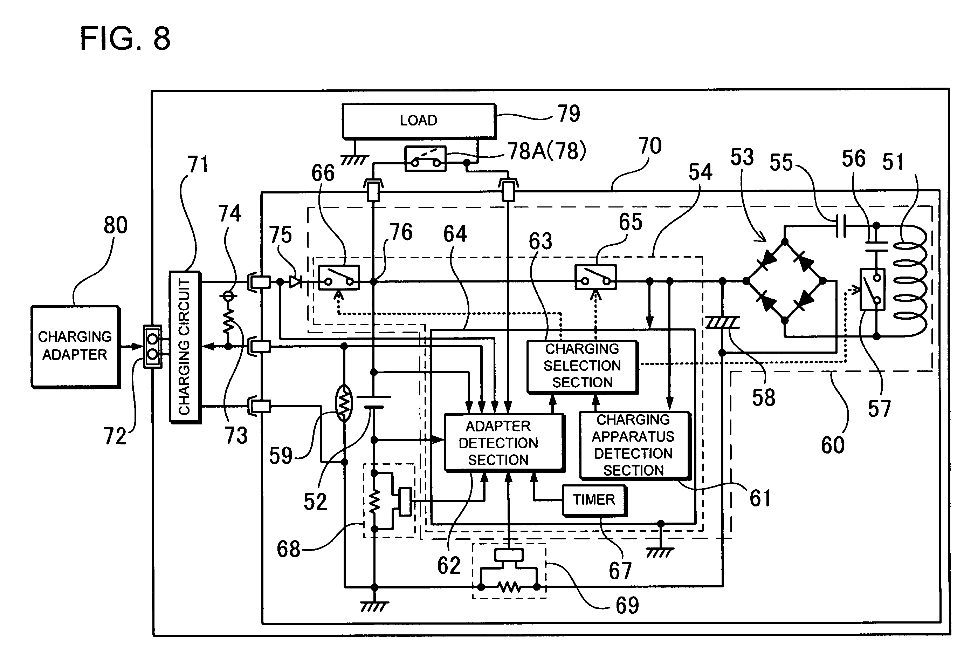

Fig. 8 shows a circuit diagram of the device housing a battery 50. The device housing a battery 50 contains a battery pack 70 as the internal battery 52, and the battery pack 70 is housed in a removable manner. The battery pack 70 in the device housing a battery 50 holds the contactless charging section 60 that charges the internal battery 52 in a contactless manner. The contactless charging section 60 is provided with the induction coil 51 that magnetically couples with the charging apparatus 10 power supply coil 11, a rectifying circuit 53 that rectifies AC induced in the induction coil 51, and a control circuit 54 that controls internal battery 52 charging with output from the rectifying circuit 53. In addition, the device housing a battery 50 contains a charging circuit 71 that charges the battery pack 70 internal battery 52 with the external charging adapter 80 connected through the charging terminals 72. Although the device housing a battery 50 described above is configured with an internal battery 52 that is a removable battery pack 70, a fixed internal battery can also be contained in the device housing a battery in a non-removable manner. In that case, the device housing a battery holds the induction coil in the contactless charging section, the internal battery, and the control circuit.

The control circuit 54 is provided with a charging apparatus detection section 61 that detects placement of the device housing a battery 50 on the charging apparatus 10, an adapter detection section 62 that detects connection or charging by the charging adapter 80 that connects to the device housing a battery 50 to charge the internal battery 52, and a charging selection section 63 that selects internal battery 52 charging by either the charging apparatus 10 or the charging adapter 80 according to signals from the charging apparatus detection section 61 and the adapter detection section 62.

When the device housing a battery 50 is placed on the charging apparatus 10 and the charging adapter 80 is also connected, the charging selection section 63 of the control circuit 54 controls internal battery 52 charging by either the charging apparatus 10 or the charging adapter 80. In the case where the device housing a battery 50 is placed on the charging apparatus 10 and the charging adapter 80 is connected, namely, when the internal battery 52 can be charged by either the charging apparatus 10 or the charging adapter 80, the control circuit 54 preferably charges the internal battery 52 only with power supplied from the charging adapter 80 and not with power transmitted from the charging apparatus 10. However, when the device housing a battery 50 is placed on the charging apparatus 10 and the charging adapter 80 is connected, the internal battery 52 can also be charged only with power transmitted from the charging apparatus 10 and not with power supplied from the charging adapter 80.

The control circuit 54 is equipped with a microcomputer 64 and switches 65, 66 that are switched ON and OFF by the microcomputer 64. The charging apparatus detection section 61, the adapter detection section 62, and the charging selection section 63 are implemented by the microcomputer 64 control circuit 54. The microcomputer 64 charging apparatus detection section 61 detects placement of the device housing a battery 50 on the charging apparatus 10, or charging by the charging apparatus 10. As its power supply voltage, the microcomputer 64 operates by power output from the rectifying circuit 53, which converts induction coil 51 output to direct current (DC), and does not operate by power supplied from the internal battery 52. Specifically, the microcomputer 64 does not consume operating power from the internal battery 52, but rather operates on power supplied by magnetic induction from the charging apparatus 10. Accordingly, when the device housing a battery 50 is placed on the charging apparatus 10, the microcomputer 64 is activated and becomes operational. The charging apparatus detection section 61 detects placement of the device housing a battery 50 on the charging apparatus 10 by detecting microcomputer 64 activation. This charging apparatus detection section 61 can detect placement on the charging apparatus 10 with a simple circuit structure. However, the present invention is not limited to a charging apparatus detection section with this circuit structure. This is because, for example, a signal can be received from charging apparatus to also detect placement on the charging apparatus.

The adapter detection section 62 detects charging adapter 80 connection or internal battery 52 charging by the charging adapter 80. The adapter detection section 62 detects charging adapter 80 connection or charging while contactless charging is in a halted state. Contactless charging is halted by switching OFF the switch 65 connected between the rectifying circuit 53 and the internal battery 52. The control circuit 54 microcomputer 64 holds the switch 65 OFF to halt contactless charging for the time period when charging adapter 80 connection or charging is being detected.

With contactless charging in the halted state, the adapter detection section 62 detects charging adapter 80 connection to, or charging of the device housing a battery 50 by detecting any one of the following conditions (1)-(6), or by detecting a plurality of those conditions. The time period for detection of charging adapter 80 connection or charging is set by a timer 67. The timer 67 is provided in the control circuit 54 and stores the time period for detection of charging adapter 80 connection or charging. Charging adapter 80 connection or charging is detected during the set time period of the timer 67.

(1) The voltage drop across a battery pack 70 protection device 78 is detected to detect charging adapter 80 charging. To protect the internal battery 52 from over-current during charging and discharging, a switching device 78A such as a field effect transistor (FET) or bipolar transistor is connected between the internal battery 52 and the load 79 of the device housing a battery 50. When the charging adapter 80 is connected and the internal battery 52 is being charged by the charging adapter 80, charging current flows through the switching device 78A generating a voltage drop. When the charging adapter 80 is not connected, no charging current flows in through the switching device 78A and no voltage drop is generated. The voltage drop due to charging current flow is proportional to product of the ON-resistance of the switching device 78A and the charging current. Accordingly, with contactless charging halted, when the voltage drop across the switching device 78A implementing the protection device 78 exceeds a set value, the adapter detection section 62 judges that the internal battery 52 is being charged from the charging adapter 80.

(2) The internal battery 52 voltage is detected to detect charging adapter 80 charging. The voltage of the internal battery 52 is higher when it is being charged than when it is not being charged. Consequently, the adapter detection section 62 can determine whether or not the charging adapter 80 is charging the internal battery 52 by detecting the internal battery 52 voltage. In particular, charging by the charging adapter 80 can be determined more accurately by detecting internal battery 52 voltage while switching contactless charging ON and OFF. When the internal battery 52 is being charged by the charging adapter 80, the internal battery 52 is continuously charged and there is little change in the voltage even if contactless charging is switched ON and OFF. In contrast, when the internal battery 52 is not being charged by the charging adapter 80 and contactless charging is switched ON and OFF, the internal battery 52 switches between a state of charging and a state of no charging, and there is a large change in voltage. Consequently, if internal battery 52 voltage rises when contactless charging is switched from OFF to ON and drops when contactless charging is switched from ON to OFF, the adapter detection section 62 judges that the charging adapter 80 is not charging. Conversely, if there is little internal battery 52 voltage change when contactless charging is switched ON and OFF, the adapter detection section 62 judges that charging is being performed by the charging adapter 80.

(3) Charging adapter 80 connection is detected by voltage in a temperature sensor 59 that detects internal battery 52 temperature. When the charging adapter 80 is connected to the device housing a battery 50, voltage rises in the temperature sensor 59 that detects internal battery 52 temperature. This is because the temperature sensor 59 connects to a power supply 74 through a pull-up resistor 73 when the charging adapter 80 is connected. When the charging adapter 80 is not connected, the temperature sensor 59 is not connected to the power supply 74 through the pull-up resistor. Specifically, when the charging adapter 80 is not connected, temperature sensor 59 voltage is approximately 0V, and when the charging adapter 80 is connected, the temperature sensor 59 connects to the power supply 74 through the pull-up resistor and its voltage rises. Therefore, the adapter detection section 62 can detect charging adapter 80 connection and charging by detecting temperature sensor 59 voltage.

(4) Charging adapter 80 connection can be determined by detecting a signal input from the charging adapter 80. In this circuit configuration, the charging adapter 80 outputs a specified signal, the adapter detection section 62 receives that signal, and charging adapter 80 connection or charging is detected.

(5) Internal battery 52 voltage rise is detected to detect internal battery 52 charging by the charging adapter 80. When the internal battery 52 is charged by the charging adapter 80, its voltage gradually rises. Accordingly, the adapter detection section 62 can detect charging adapter 80 charging by detecting the rate of internal battery 52 voltage rise. When the charging adapter 80 is not charging the internal battery 52, there is no internal battery 52 voltage rise. When the internal battery 52 is being charged by the charging adapter 80, the rate of voltage rise increases. Consequently, the adapter detection section 62 can detect charging by the charging adapter 80 by detecting the rate of internal battery 52 voltage rise in a unit time period.

(6) The rate of internal battery 52 temperature rise is detected to detect internal battery 52 charging by the charging adapter 80. When the internal battery 52 is charged by the charging adapter 80, its temperature gradually rises. Accordingly, the adapter detection section 62 can detect charging adapter 80 charging by detecting the rate of internal battery 52 temperature rise. When the charging adapter 80 is not charging the internal battery 52, there is little internal battery 52 temperature rise. When the internal battery 52 is being charged by the charging adapter 80, the rate of temperature rise increases. Consequently, the adapter detection section 62 can detect charging by the charging adapter 80 when contactless charging is halted by detecting the rate of internal battery 52 temperature rise.

In addition, the adapter detection section 62 can detect charging by the charging adapter 80 without halting contactless charging. This adapter detection section 62 is provided with a first charging current detection circuit 68 that detects internal battery 52 charging current, and a second charging current detection circuit 69 that detects charging current output from the charging apparatus 10. Charging by the charging adapter 80 is detected from the difference between charging current detected by the first charging current detection circuit 68 and the second charging current detection circuit 69.

Since the first charging current detection circuit 68 detects internal battery 52 charging current, it detects charging current that is the sum of charging current from the charging apparatus 10 and charging current from the charging adapter 80. In contrast, the second charging current detection circuit 69 detects only charging current from the charging apparatus 10. Accordingly, when the internal battery 52 is charged only by the charging apparatus 10, current detected by the first charging current detection circuit 68 becomes the same value as the current detected by the second charging current detection circuit 69. Consequently, when the same current is detected by the first charging current detection circuit 68 and the second charging current detection circuit 69, it is judged that the internal battery 52 is only being charged by the charging apparatus 10 and not by the charging adapter 80. When both the charging apparatus 10 and the charging adapter 80 are charging the internal battery 52, current detected by the first charging current detection circuit 68 becomes greater than that detected by the second charging current detection circuit 69. Under these conditions, it can be judged that the internal battery 52 is being charged by the charging adapter 80.

Further, the device housing a battery 50 is provided with a diode 75 between the charging adapter 80 and the internal battery 52, and the adapter detection section 62 can detect charging adapter 80 charging by detecting the adapter-side diode 75 voltage. In the device housing a battery 50 of Fig. 8, an output line from the rectifying circuit 53 connects with an output line from the charging circuit 71 at a connection node 76 on the positive output-side of the internal battery 52. The diode 75 is connected on the charging circuit 71 side of the switch 66 between the connection node 76 and the charging circuit 71. The diode 75 is connected with a polarity that passes current from the charging circuit 71 to the internal battery 52. The adapter detection section 62 can detect the charging status of the charging adapter 80 by detecting whether or not there is a voltage on the charging circuit 71 side of the diode 75. This is because no voltage is detected at the charging circuit 71 side of the diode 75 when the charging adapter 80 is not connected and the charging circuit 71 is not charging the internal battery 52, but voltage is detected when the charging adapter 80 is connected and power is supplied to the internal battery 52 from the charging circuit 71. This configuration can also detect charging by the charging adapter 80 with a simple circuit structure and without halting contactless charging. In the device housing a battery 50 of Fig. 8, the diode 75 is connected on the charging circuit 71 side of the switch 66. However, the diode can also be connected on the connection node-side of the switch or between the charging circuit and the charging terminal.

An adapter detection section 62, which detects charging by the charging adapter 80 while charging with both the charging apparatus 10 and the charging adapter 80, temporarily charges the internal battery 52 with both the charging apparatus 10 and the charging adapter 80. In this situation, the internal battery 52 cannot be charged under favorable conditions. Therefore, the time period for detecting charging by the charging adapter 80 with the internal battery 52 charged by both the charging apparatus 10 and the charging adapter 80 is set as short as possible. This set time period is stored in the timer 67. During the set time period of the timer 67, the adapter detection section 62 determines charging by the charging adapter 80, and subsequently the charging selection section 63 controls internal battery 52 charging only by the charging adapter 80.

When the control circuit 54 charging apparatus detection section 61 detects placement on the charging apparatus 10 and the adapter detection section 62 detects charging adapter 80 connection or charging, the charging selection section 63 sends a halt-charging-signal to the charging apparatus 10 to halt charging by the charging apparatus 10, and charges the internal battery 52 with the charging adapter 80. When the device housing a battery 50 is not placed on the charging apparatus 10 and the charging adapter 80 is connected, the control circuit 54 charges the internal battery 52 with the charging adapter 80. The control circuit 54 charging apparatus detection section 61 and adapter detection section 62 are provided to prevent charging by both the charging apparatus 10 and the charging adapter 80. When the device housing a battery 50 is not placed on the charging apparatus 10, there is no need to detect charging adapter 80 connection or charging with the adapter detection section 62. This is because the internal battery 52 can be charged under ideal conditions by the charging adapter 80. Since the adapter detection section 62 only detects charging adapter 80 connection or charging when the device housing a battery 50 is placed on the charging apparatus 10, it is not necessary for the adapter detection section 62 to detect charging adapter 80 connection or charging when the device housing a battery 50 is not placed on the charging apparatus 10. Accordingly, a device housing a battery 50 that operates the control circuit 54 microcomputer 64 with power transmitted from the charging apparatus 10 only activates the microcomputer 64 to detect charging adapter 80 connection and charging. However, the control circuit 54 charging apparatus detection section 61 and adapter detection section 62 can also be continuously operated to detect placement on the charging apparatus 10 and charging adapter 80 connection and charging. In that case, when the device housing a battery 50 is placed on the charging apparatus 10 and the charging adapter 80 is not connected, the control circuit 54 charges the internal battery 52 from the charging apparatus 10, and when the device housing a battery 50 is not placed on the charging apparatus 10 and the charging adapter 80 is connected, the control circuit 54 charges the internal battery 52 from the charging adapter 80.

The control circuit 54 in Fig. 8 holds a signal switch 57, which is connected in series with a parallel capacitor 56 connected in parallel with the induction coil 51, ON to send a halt-charging-signal to the charging apparatus 10. The charging apparatus 10 detects connection of the parallel capacitor 56 to the induction coil 51 and stops delivering AC to the power supply coil 11. The control circuit 54 can also switch the signal switch 57 ON and OFF in a prescribed manner (instead of holding it in the ON state) to convey connection of the charging adapter 80 to the charging apparatus 10. In that case, the charging apparatus 10 detects ON and OFF switching of the signal switch 57 to detect charging adapter 80 connection and stops delivering AC to the power supply coil 11. A system that stops the charging apparatus 10 from charging the internal battery 52 by halting the input of AC to the power supply coil 11 not only reduces unnecessary power consumption, but also prevents detrimental heating of the device housing a battery 50 and battery pack 70 by power output from the power supply coil 11. However, when charging adapter 80 connection or charging is detected, AC output to the power supply coil 11 does not necessarily have to be stopped, and the control circuit 54 in the battery pack 70 can also turn OFF the switch 65 to cut-off charging current to the internal battery 52 and stop charging by the charging apparatus 10.

The rectifying circuit 53 rectifies AC power induced in the induction coil 51 and outputs the rectified power to the control circuit 54. The device housing a battery 50 of the figures has a series capacitor 55 connected between the induction coil 51 and the rectifying circuit 53, and AC power induced in the induction coil 51 is input to the rectifying circuit 53 through that series capacitor 55. The series capacitor 55 forms a series resonant circuit with the induction coil 51 to efficiently input AC power induced in the induction coil 51 to the rectifying circuit 53. Accordingly, the capacitance of the series capacitor 55 is selected to combine with the induction coil 51 inductance for an overall impedance having a minimum near the frequency of the induced AC power. In addition, the device housing a battery 50 of the figures has an electrolytic capacitor 58 connected at the output-side of the rectifying circuit 53 to smooth ripple current in the rectifying circuit 53 output.

As shown in Figs. 1-7, the charging apparatus 10 is provided with the power supply coil 11 connected to an AC power source 12 to induce electromotive force (emf) in the induction coil 51, and a case 20 housing the power supply coil 11 and having a top plate 21 where a device housing a battery 50 is placed. The power supply coil 11 magnetically couples with the induction coil 51 to transmit power. The device housing a battery 50 induction coil 51 and the power supply coil 11 are positioned to magnetically couple the coils and transmit power from the power supply coil 11 to the induction coil 51. The power supply coil 11 can be made large to increase the effective area for induction coil 51 placement and transmission of power from the power supply coil 11 to the induction coil 51. A preferable charging apparatus 10 implementation moves the power supply coil 11 to the position of the induction coil 51 in the device housing a battery 50 placed on the case 20. This charging apparatus 10 can efficiently transmit power from the power supply coil 11 to the induction coil 51.

As shown in the figures, a charging apparatus 10 that moves the power supply coil 11 to the position of the induction coil 51 is provided with a moving mechanism 13 housed in the case 20 that moves the power supply coil 11 along the inside surface of the top plate 21, and a position detection controller 14 that detects the position of the device housing a battery 50 placed on the top plate 21 and controls the moving mechanism 13 to move the power supply coil 11 in close proximity to the induction coil 51 in the device housing a battery 50. The charging apparatus 10 described above houses the power supply coil 11, the AC power source 12, the moving mechanism 13, and the position detection controller 14 inside the case 20.

The charging apparatus 10 charges the battery 52 inside a device housing a battery 50 in the following manner.
(1) When a device housing a battery 50 is placed on the top plate 21 of the case 20, the position detection controller 14 detects its position.
(2) The position detection controller 14, which has detected the position of the device housing a battery 50, controls the moving mechanism 13 to move the power supply coil 11 along the inside of the top plate 21 and position it in close proximity to the induction coil 51 of the device housing a battery 50.
(3) The power supply coil 11, which has been moved close to the induction coil 51, is magnetically coupled to the induction coil 51 and transmits AC power to the induction coil 51.
(4) The device housing a battery 50 converts the induction coil 51 AC power to DC and charges the internal battery 52 with that DC power.

The charging apparatus 10, which charges the battery 52 in the device housing a battery 50 by the procedure described above, houses the power supply coil 11 connected to the AC power source 12 inside the case 20. The power supply coil 11 is disposed beneath the top plate 21 of the case 20 in a horizontal orientation that allows it to move along the inside of the top plate 21. The efficiency of power transmission from the power supply coil 11 to the induction coil 51 is improved by narrowing the gap between the power supply coil 11 and the induction coil 51. With the power supply coil 11 moved into close proximity with the induction coil 51, the gap between the power supply coil 11 and the induction coil 51 is preferably less than or equal to 7mm. Therefore, the power supply coil 11 is disposed under the top plate 21 and positioned as close as possible to the top plate 21. Since the power supply coil 11 is moved close to the induction coil 51 of the device housing a battery 50 placed on the top plate 21, the power supply coil 11 is disposed in a manner that allows it to move along the inside surface of the top plate 21.

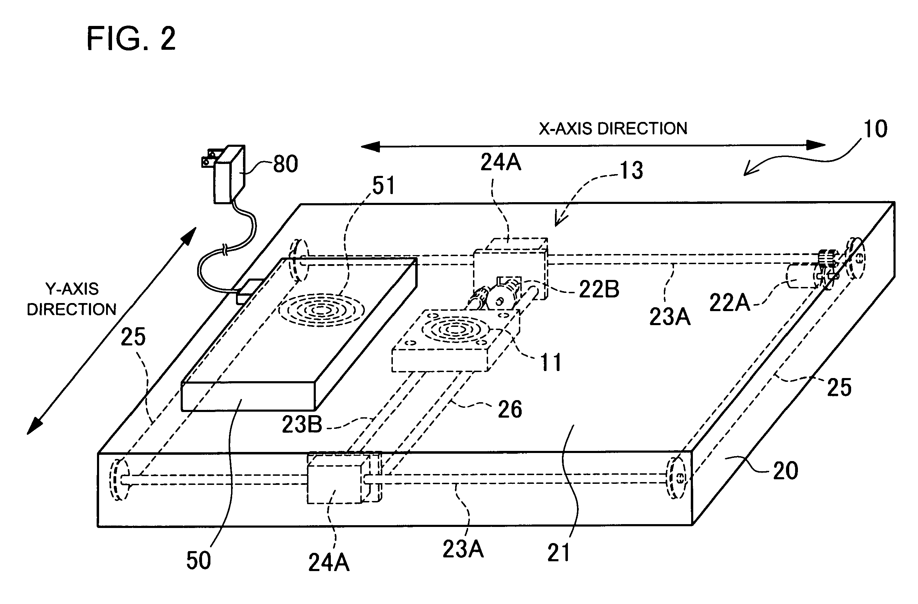

The case 20 that houses the power supply coil 11 is provided with a planar top plate 21 where a device housing a battery 50 can be placed. The charging apparatus 10 of Figs. 1 and 2 has a top plate 21 that is entirely planar and disposed horizontally. The top plate 21 is made large enough to allow placement of devices housing a battery 50 having different sizes and shapes. For example, the top plate 21 can have a rectangular shape with a side having a length of 5cm to 30cm. However, the top plate 21 can also have a circular shape with a diameter of 5cm to 30cm. The charging apparatus 10 of Figs. 1 and 2 has a large top plate 21 that allows simultaneous placement of a plurality of devices housing a battery 50. Here, a plurality of devices housing a battery 50 can be placed on the top plate 21 at the same time to allow sequential charging of their internal batteries 52. Further, the top plate can also be provided with side-walls or other barriers around its perimeter, and devices housing a battery can be placed inside the side-walls to charge the internal batteries.

The power supply coil 11 is wound in a plane parallel to the top plate 21, and radiates AC magnetic flux above the top plate 21. This power supply coil 11 emits AC magnetic flux perpendicular to, and beyond the top plate 21. The power supply coil 11 is supplied with AC power from the AC power source 12 and radiates AC magnetic flux above the top plate 21.

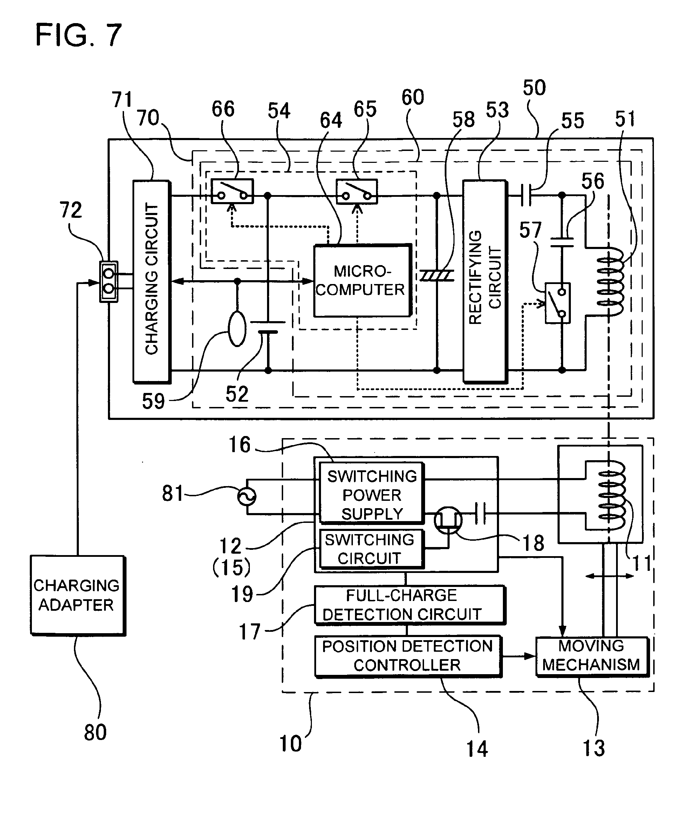

Fig. 7 is a circuit diagram showing connection of the AC power source 12 to the power supply coil 11. The AC power source 12 in this figure is provided with a switching power supply 16 that converts input commercial power 81 to DC, a switching device 18 that converts DC output from the switching power supply 16 to AC supplied to the power supply coil 11, and a switching circuit 19 that controls the switching device 18.

The power supply coil 11 is moved in close proximity to the induction coil 51 by the moving mechanism 13. The moving mechanism 13 of Figs. 2-5 moves the power supply coil 11 along the inside of the top plate 21 in the X-axis and Y-axis directions to position it close to the induction coil 51. The moving mechanism 13 of the figures rotates threaded rods 23 via servo motors 22 controlled by the position detection controller 14 to move nut blocks 24 that are threaded onto the threaded rods 23. The nut blocks 24 are moved to move the power supply coil 11 close to the induction coil 51. The servo motors 22 are provided with an X-axis servo motor 22A to move the power supply coil 11 in the X-axis direction, and a Y-axis servo motor 22B to move the power supply coil 11 in the Y-axis direction. The threaded rods 23 are provided with a pair of X-axis threaded rods 23A to move the power supply coil 11 in the X-axis direction, and a Y-axis threaded rod 23B to move the power supply coil 11 in the Y-axis direction. The pair of X-axis threaded rods 23A are disposed parallel to each other, and are connected via belts 25 to rotate together when driven by the X-axis servo motor 22A. The threaded nut blocks 24 are provided with a pair of X-axis nut blocks 24A that are threaded onto each X-axis threaded rod 23A, and a Y-axis nut block 24B that is threaded onto the Y-axis threaded rod 23B. Both ends of the Y-axis threaded rod 23B are connected to the X-axis nut blocks 24A in a manner allowing the rod to rotate. The power supply coil 11 is mounted on the Y-axis nut block 24B.

Further, the moving mechanism 13 of the figures has a guide rod 26 disposed parallel to the Y-axis threaded rod 23B to move the power supply coil 11 in the Y-axis direction while retaining it in a horizontal orientation. The guide rod 26 is connected at both ends to the X-axis nut blocks 24A and moves together with the pair of X-axis nut blocks 24A. The guide rod 26 passes through a guide block 27 attached to the power supply coil 11 to allow power supply coil 11 movement along the guide rod 26 in the Y-axis direction. Specifically, the power supply coil 11 is moved with horizontal orientation in the Y-axis direction via the Y-axis nut block 24B and guide block 27 that move along the parallel disposed Y-axis threaded rod 23B and guide rod 26.

When the X-axis servo motor 22A rotates the X-axis threaded rods 23A of this moving mechanism 13, the pair of X-axis nut blocks 24A moves along the X-axis threaded rods 23A to move the Y-axis threaded rod 23B and the guide rod 26 in the X-axis direction. When the Y-axis servo motor 22B rotates the Y-axis threaded rod 23B, the Y-axis nut block 24B moves along the Y-axis threaded rod 23B to move the power supply coil 11 in the Y-axis direction. Here, the guide block 27 attached to the power supply coil 11 moves along the guide rod 26 to maintain the power supply coil 11 in a horizontal orientation during movement in the Y-axis direction. Consequently, rotation of the X-axis servo motor 22A and Y-axis servo motor 22B can be controlled by the position detection controller 14 to move the power supply coil 11 in the X-axis and Y-axis directions. However, the charging apparatus of the present invention is not limited to a moving mechanism with the configuration described above. This is because any configuration of moving mechanism can be used that can move the power supply coil in the X-axis and Y-axis directions.

The position detection controller 14 detects the position of a device housing a battery 50 that is placed on the top plate 21. The position detection controller 14 of Figs. 2-5 detects the position of the induction coil 51 housed in the device housing a battery 50, and moves the power supply coil 11 close to the induction coil 51.

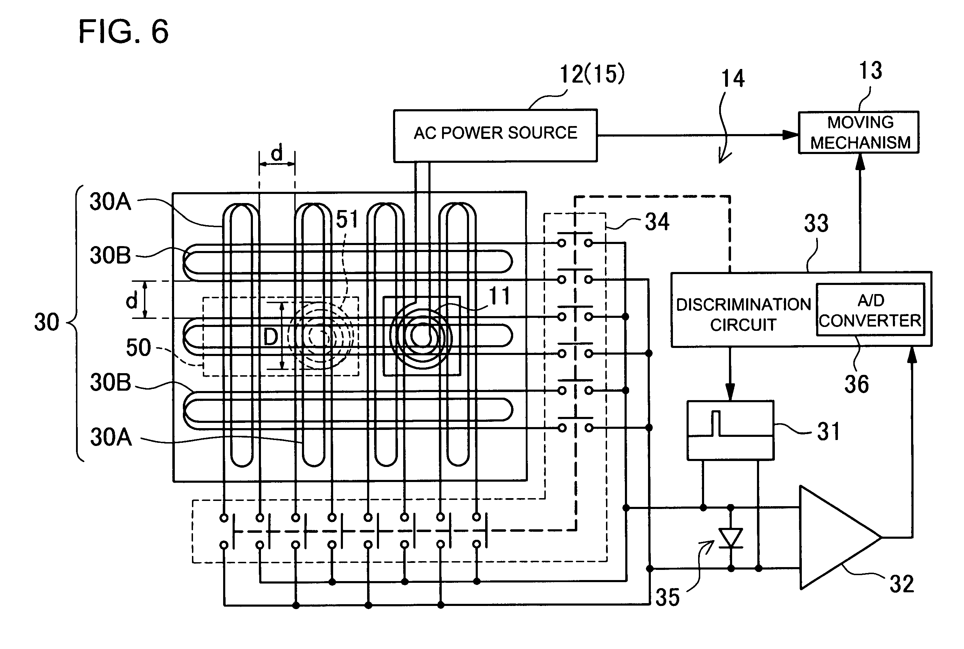

The position detection controller 14 controls the moving mechanism 13 to position the power supply coil 11 in close proximity to the induction coil 51. As shown in Fig. 6, the position detection controller 14 is provided with a plurality of position detection coils 30 fixed to the inside of the top plate 21, a detection signal generating circuit 31 that supplies position detection signals to the position detection coils 30, a receiving circuit 32 that receives echo signals from the position detection coils 30 resulting from excitation of the induction coil 51 by position detection signals supplied to the position detection coils 30 from the detection signal generating circuit 31, and a discrimination circuit 33 that determines induction coil 51 position from the echo signals received by the receiving circuit 32.

The position detection coils 30 are made up of a plurality of coils in rows and columns. The plurality of position detection coils 30 is fixed with specified intervals between each coil on the inside surface of the top plate 21. The position detection coils 30 are provided with a plurality of X-axis detection coils 30A that detect induction coil 51 position on the X-axis, and a plurality of Y-axis detection coils 30B that detect induction coil 51 position on the Y-axis. Each X-axis detection coil 30A is a long narrow loop extending in the Y-axis direction, and the X-axis detection coils 30A are fixed to the inside of the top plate 21 at specified intervals. The interval (d) between adjacent X-axis detection coils 30A is smaller than the outside diameter (D) of the induction coil 51, and preferably the interval (d) between X-axis detection coils 30A is from 1/4 times to 1 times the induction coil 51 outside diameter (D). The position of the induction coil 51 on the X-axis can be detected more accurately by reducing the interval (d) between X-axis detection coils 30A. Each Y-axis detection coil 30B is a long narrow loop extending in the X-axis direction, and the Y-axis detection coils 30B are also fixed to the inside of the top plate 21 at specified intervals. In the same manner as the X-axis detection coils 30A, the interval (d) between adjacent Y-axis detection coils 30B is smaller than the outside diameter (D) of the induction coil 51, and preferably the interval (d) between Y-axis detection coils 30B is from 1/4 times to 1 times the induction coil 51 outside diameter (D). The position of the induction coil 51 on the Y-axis can also be detected more accurately by reducing the interval (d) between Y-axis detection coils 30B.

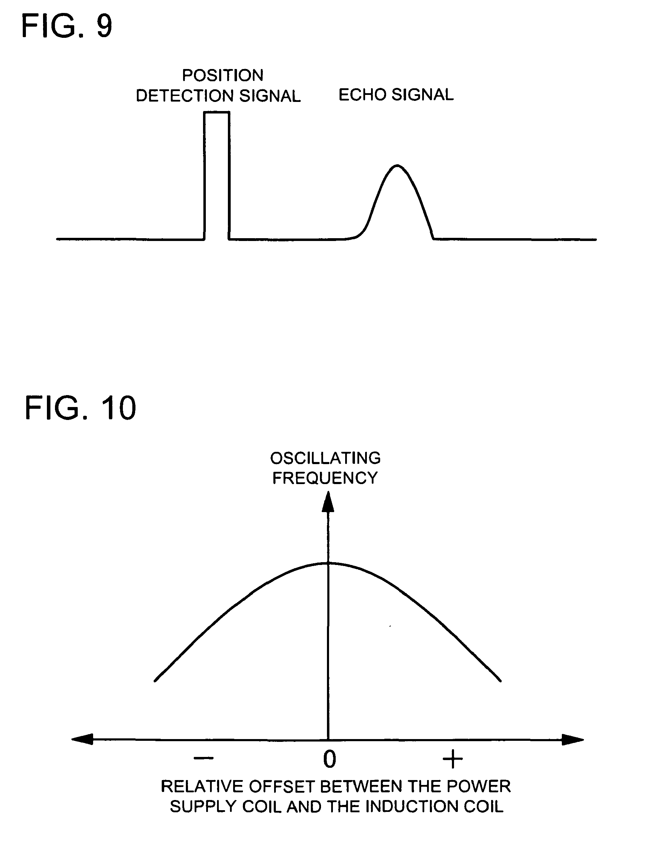

The detection signal generating circuit 31 issues pulse signals, which are the position detection signals, with a specified timing. A position detection coil 30, in which a position detection signal has been input, excites a nearby induction coil 51 via the position detection signal. The induction coil 51, which has been excited by a position detection signal, outputs an echo signal, which is generated by the energy of the induced current flow, and that echo signal is detected by the position detection coil 30. Specifically, as shown in Fig. 9, following a given delay time after a position detection signal has been input, the induction coil 51 generates an echo signal, and that echo signal is induced in the position detection coil 30 near the induction coil 51. In the previously described device housing a battery 50, the signal switch 57 is switched ON during position detection signal input to connect the parallel capacitor 56 to the induction coil 51 and form a parallel resonant circuit. This has the characteristic that the amplitude can be increased for the echo signal output from the induction coil 51 corresponding to position detection signal input. Accordingly, induction coil 51 position can be detected more accurately. The echo signal induced in the position detection coil 30 is sent from the receiving circuit 32 to the discrimination circuit 33. The discrimination circuit 33 uses the echo signal input from the receiving circuit 32 to determine if the induction coil 51 is close to the position detection coil 30. When echo signals are induced in a plurality of position detection coils 30, the discrimination circuit 33 determines that the position detection coil 30 with the largest amplitude echo signal is closest to the induction coil 51.

The position detection controller 14 shown in Fig. 6 connects each position detection coil 30 to the receiving circuit 32 via a switching matrix 34. Since this position detection controller 14 can connect a plurality of position detection coils 30 by sequential switching, echo signals from a plurality of position detection coils 30 can be detected with one receiving circuit 32. However, a receiving circuit can also be connected to each position detection coil to detect the echo signals.

In the position detection controller 14 of Fig. 6, the discrimination circuit 33 controls the switching matrix 34 to sequentially switch each of the position detection coils 30 for connection to the receiving circuit 32. Since the detection signal generating circuit 31 is connected outside the switching matrix 34, it outputs position detection signals to each position detection coil 30. The amplitude of the position detection signals output from the detection signal generating circuit 31 to the position detection coils 30 is extremely large compared to the echo signals from the induction coil 51. The receiving circuit 32 has a diode connected to its input-side that forms a voltage limiting circuit 35. Position detection signals input to the receiving circuit 32 from the detection signal generating circuit 31 are voltage limited by the limiting circuit 35. Low amplitude echo signals are input to the receiving circuit 32 without voltage limiting. The receiving circuit 32 amplifies and outputs both position detection signals and the echo signals. An echo signal output from the receiving circuit 32 is a signal that is delayed from the position detection signal by a given delay time such as several µsec to several hundred µsec. Since the echo signal delay time from the position detection signal is constant, a signal received after the constant delay time is assumed to be an echo signal, and the proximity of a position detection coil 30 to the induction coil 51 is determined from the amplitude of that echo signal.

The receiving circuit 32 is an amplifier that amplifies echo signals input from the position detection coils 30. The receiving circuit 32 outputs each position detection signal and echo signal. The discrimination circuit 33 determines if the induction coil 51 is placed next to a position detection coil 30 from the position detection signal and echo signal input from the receiving circuit 32. The discrimination circuit 33 is provided with an analog-to-digital (A/D) converter 36 to convert the signals input from the receiving circuit 32 to digital signals. Digital signals output from the A/D converter 36 are processed to detect the echo signals. The discrimination circuit 33 detects a signal that is delayed from the position detection signal by a given delay time as an echo signal, and determines if the induction coil 51 is close to the position detection coil 30 from the amplitude of the echo signal.

The discrimination circuit 33 controls the switching matrix 34 to sequentially connect each of the plurality of X-axis detection coils 30A to the receiving circuit 32 to detect the position of the induction coil 51 along the X-axis. For each X-axis detection coil 30A connected to the receiving circuit 32, the discrimination circuit 33 outputs a position detection signal to that X-axis detection coil 30A and determines if the induction coil 51 is close to that X-axis detection coil 30A by detection or lack of detection of an echo signal after a given delay time from the position detection signal. The discrimination circuit 33 connects each one of the X-axis detection coils 30A to the receiving circuit 32, and determines if the induction coil 51 is close to any of the X-axis detection coils 30A. If the induction coil 51 is close to one of the X-axis detection coils 30A, an echo signal will be detected when that X-axis detection coil 30A is connected to the receiving circuit 32. Consequently, the discrimination circuit 33 can determine the position of the induction coil 51 along the X-axis from the X-axis detection coil 30 that outputs an echo signal. When the induction coil 51 straddles a plurality of X-axis detection coils 30, echo signals can be detected by a plurality of X-axis detection coils 30A. In that case, the discrimination circuit 33 determines that the induction coil 51 is closest to the X-axis detection coil 30A that detects the strongest echo signal, which is the echo signal with the largest amplitude. The discrimination circuit 33 controls the Y-axis detection coils 30B in the same manner to determine the position of the induction coil 51 along the Y-axis.

The discrimination circuit 33 controls the moving mechanism 13 according to the detected X-axis position and Y-axis position to move the power supply coil 11 close to the induction coil 51. The discrimination circuit 33 controls the X-axis servo motor 22A to move the power supply coil 11 to the induction coil 51 position on the X-axis. Further, the discrimination circuit 33 controls the Y-axis servo motor 22B to move the power supply coil 11 to the induction coil 51 position on the Y-axis.

The position detection controller 14 moves the power supply coil 11 to a position close to the induction coil 51 in the manner described above. The position detection controller 14 moves the power supply coil 11 close to the induction coil 51, and subsequently power is transmitted from the power supply coil 11 to the induction coil 51 to charge the internal battery 52. However, the charging apparatus can further refine the position of the power supply coil 11 and move it still closer to the induction coil 51 and subsequently transmit power and charge the internal battery 52. A position detection controller 15 that can accurately detect induction coil 51 position has an AC power source 12 that is a self-excited oscillator circuit. The position detection controller 15 controls the moving mechanism 13 to move the power supply coil 11 to a position accurately determined by the oscillating frequency of the self-excited oscillator circuit. The position detection controller 15 controls the moving mechanism 13 X-axis servo motor 22A and Y-axis servo motor 22B to move the power supply coil 11 along the X and Y-axes while detecting the AC power source 12 oscillating frequency. Self-excited oscillator circuit oscillating frequency characteristics are shown in Fig, 10. This figure shows the oscillating frequency as a function of the relative offset (displacement) between the power supply coil 11 and the induction coil 51. As shown in this figure, the oscillating frequency of the self-excited oscillator circuit has a maximum where the power supply coil 11 and induction coil 51 are closest, and the oscillating frequency drops off as the two coils become separated. The position detection controller 15 controls the moving mechanism 13 X-axis servo motor 22A to move the power supply coil 11 along the X-axis, and stops the power supply coil 11 where the oscillating frequency reaches a maximum. Similarly, the position detection controller 15 controls the Y-axis servo motor 22B in the same manner to move the power supply coil 11 along the Y-axis, and stops the power supply coil 11 where the oscillating frequency reaches a maximum. The position detection controller 15 can move the power supply coil 11 in the manner described above to a position that is closest to the induction coil 51.

When an echo signal is detected, the charging apparatus 10 discrimination circuit 43 can recognize and distinguish that an induction coil 51 of a device housing a battery 50 has been placed on the charging apparatus. When a waveform is detected and determined to be different from an echo signal waveform, an object other than the induction coil 51 of a device housing a battery 50 (for example, a metal foreign object) is assumed to be on the charging apparatus and the supply of power can be terminated. In addition, when no echo signal waveform is detected, it is assumed that no device housing a battery 50 induction coil 51 has been placed on the charging apparatus and power is not supplied.

The charging apparatus 10 position detection controller 14, 15 controls the moving mechanism 13 to move the power supply coil 11 close to the induction coil 51. In this state, AC power is supplied to the power supply coil 11 from the AC power source 12. AC power from the power supply coil 11 is transmitted to the induction coil 51 and used to charge the battery 52. When full-charge of the battery 52 is detected in the device housing a battery 50, charging is stopped and a full-charge signal is sent to the charging apparatus 10.

The device housing a battery 50 can output a full-charge signal to the induction coil 51, and the full-charge signal can be sent from the induction coil 51 to the power supply coil 11 to transmit full-charge information to the charging apparatus 10. The device housing a battery 50 can output an AC signal to the induction coil 51 with a frequency different from that of the AC power source 12, and the charging apparatus 10 can receive that AC signal with the power supply coil 11 to detect full-charge. Or, the device housing a battery 50 can output a full-charge signal to the induction coil 51 that is a modulated carrier wave with a specified frequency, and the charging apparatus 10 can receive the carrier wave of specified frequency and demodulate that signal to detect the full-charge signal. Further, the device housing a battery can wirelessly transmit a full-charge signal to the charging apparatus to send the full-charge information. In that case, the device housing a battery contains a transmitter to send the full-charge signal, and the charging apparatus contains a receiver to receive the full-charge signal. The charging apparatus 10 shown in Fig. 7 contains a full-charge detection circuit 17 to detect full-charge of the internal battery 52. This full-charge detection circuit 17 detects a full-charge signal sent from the device housing a battery 50 to detect battery 52 full-charge.

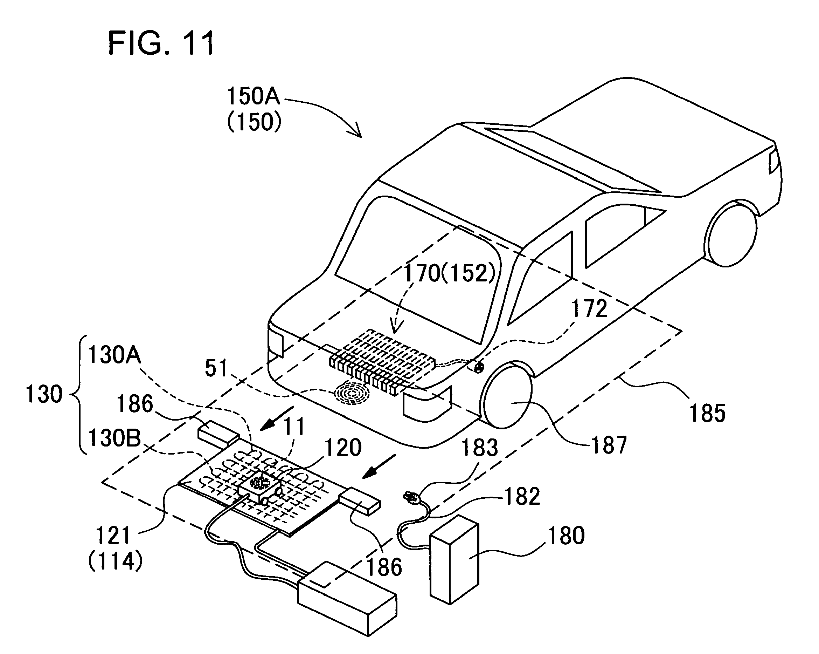

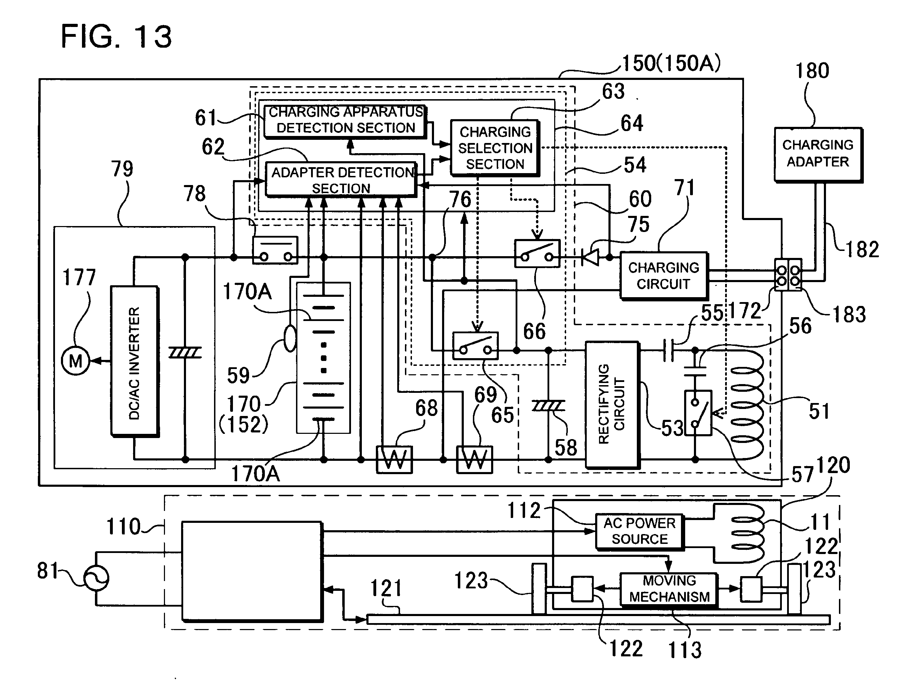

Turning to Figs. 11-13, an example of another device housing a battery and charging apparatus is shown. The device housing a battery 150 shown in the figures is an electric vehicle 150A driven by an electric driving motor 177. The electric vehicle 150A, which is the device housing a battery 150, carries a driving battery 170 on-board to power the driving motor 177. The electric vehicle 150A shown in the figures is an electric automobile (electric car, electric vehicle, EV). However, the electric vehicle can also be any vehicle, which is driven by an electric driving motor and carries an internal battery charged in a contactless manner by a charging apparatus, such as an electric wheel chair, an electric go-cart, or an electric fork-lift. In the embodiment described below, structural elements that are the same as in the previously described device housing a battery 50 and charging apparatus 10 are labeled with the same number and their detailed description is omitted.

The driving battery 170 powers the driving motor 177 that drives the electric vehicle. The driving battery 170 has many battery cells 170A connected in series to increase output voltage and supply high power to the driving motor 177. Nickel-hydride batteries or lithium ion rechargeable batteries are used as the battery cells 170A. However, any battery that can be charged such as nickel-cadmium batteries can be used as rechargeable battery cells.

Further, the electric vehicle 150A, which is the device housing a battery 150, is provided with a contactless charging section 60 that charges the internal battery 152, which is the driving battery 170, in a contactless manner. The contactless charging section 60 is provided with an induction coil 51 that magnetically couples with a power supply coil 11 in the charging apparatus 110, a rectifying circuit 53 that rectifies AC induced in the induction coil 51, and a control circuit 54 that controls charging of the internal battery 152 in the device housing a battery 150 with output from the rectifying circuit 53. The internal battery 152 is charged by power transmitted from the charging apparatus 110 power supply coil 11 to the induction coil 51 by magnetic induction.

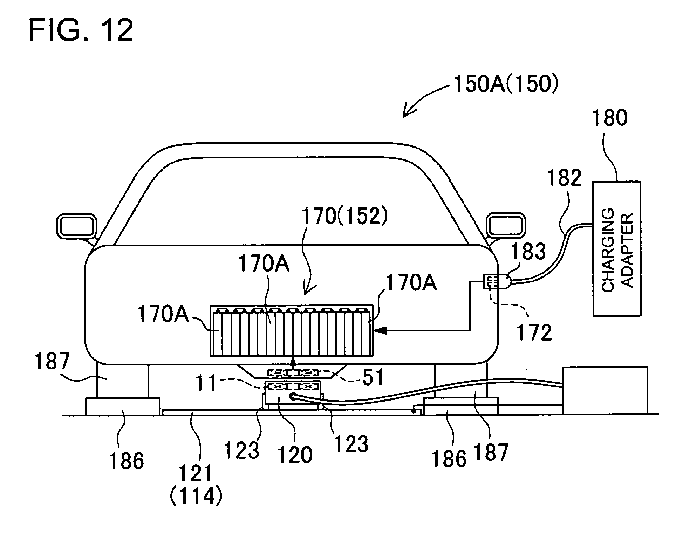

As shown in Figs. 11-13, the charging apparatus 110 is provided with the power supply coil 11 connected to an AC power source 112 to induce electromotive force (emf) in the induction coil 51, a charging cart 120 that houses the power supply coil 11 and moves along the surface of the device housing a battery 150 holding the induction coil 51, and a position detection controller 114 that detects the position of the induction coil 51 in the electric vehicle 150A parked in a set location and moves the charging cart 120 power supply coil 11 to the position of the induction coil 51. As shown in Figs. 11 and 12, this charging apparatus 110 is disposed under the electric vehicle 150A to charge the driving battery 170 installed in the electric vehicle 150A. The charging apparatus 110 detects induction coil 51 location with the position detection controller 114, moves the charging cart 120 housing the power supply coil 11, and moves the power supply coil 11 to the position of the induction coil 51. With the power supply coil 11 moved to a position that magnetically couples it with the induction coil 51, the charging apparatus 110 transmits power from the power supply coil 11 to the induction coil 51 to charge the internal battery 152 in a contactless manner. This charging apparatus 110 can move the power supply coil 11 to the position of the induction coil 51 in an electric vehicle 150A parked in a designated parking area 185 and can efficiently transmit power from the power supply coil 11 to the induction coil 51.

The power supply coil 11 is a planar coil wound in a plane parallel to the upper surface of the charging cart 120 to radiate AC magnetic flux upward from the charging cart 120. This power supply coil 11 emits AC magnetic flux perpendicular to, and above the upper surface of the charging cart 120. The power supply coil 11 is supplied with AC power from the AC power source 112 and radiates AC magnetic flux above the upper surface of the charging cart 120.

The charging cart 120 is controlled by the position detection controller 114 to move the power supply coil 11 to the position of the induction coil 51. The power supply coil 11 is connected to the AC power source 112 and housed in a horizontal disposition under the upper surface of the charging cart 120. The charging cart 120 moves along the under-surface of the electric vehicle 150A to position the power supply coil 11 in close proximity to the induction coil 51 housed inside the under-surface of the electric vehicle 150A. The charging cart 120 of the figures is provided with wheels 123 to move the charging cart 120, motors 122 to drive the wheels 123, and a moving mechanism 113 to control the motors 122.

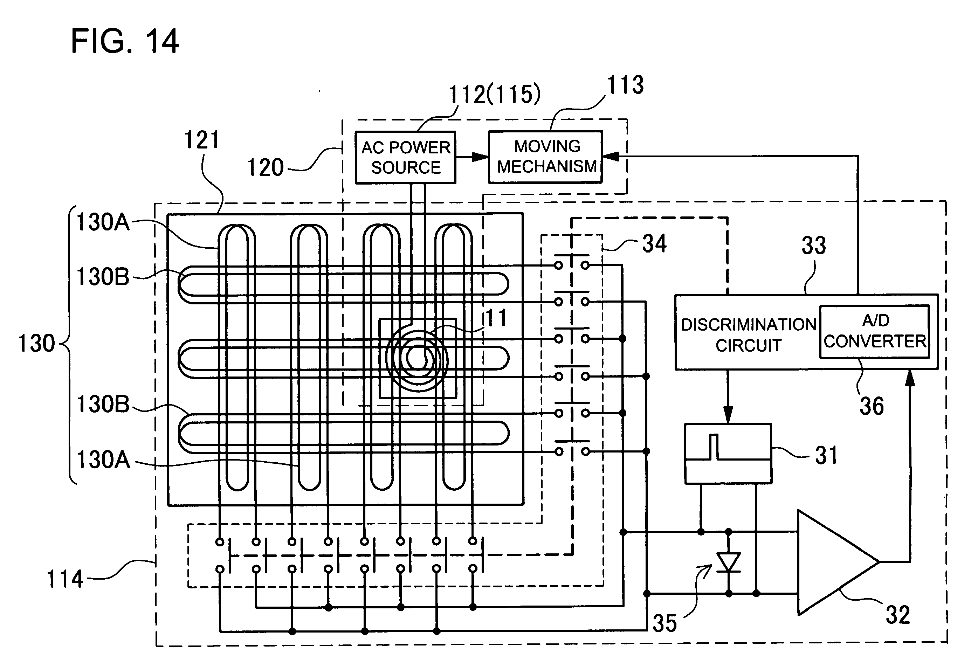

The position detection controller 114 detects the position of the induction coil 51 housed in an electric vehicle 150A parked in the designated parking area 185, and controls the charging cart 120 moving mechanism 113 to position the power supply coil 11 in close proximity to the induction coil 51. As shown in Figs. 11 and 14, the position detection controller 114 has a plurality of position detection coils 130 fixed to the inside of a position detection plate 121. The position detection coils 130 are provided with a plurality of X-axis detection coils 130A that detect induction coil 51 position on the X-axis, and a plurality of Y-axis detection coils 130B that detect induction coil 51 position on the Y-axis. Each X-axis detection coil 130A is a long narrow loop extending in the Y-axis direction, and the X-axis detection coils 130A are fixed to the inside of the position detection plate 121 at specified intervals. Each Y-axis detection coil 130B is a long narrow loop extending in the X-axis direction, and the Y-axis detection coils 130B are also fixed to the inside of the position detection plate 121 at specified intervals.

The position detection controller 114 supplies position detection signals from a detection signal generating circuit 31 to the position detection coils 130, receives echo signals output from the induction coil 51 excited by detection signal pulses, and detects induction coil 51 position from the received echo signals with a discrimination circuit 33. The discrimination circuit 33 detects the position of the induction coil 51 on the X-axis from echo signals detected by the X-axis detection coils 130A, and detects the position of the induction coil 51 on the Y-axis from echo signals detected by the Y-axis detection coils 1308.

When the position detection controller 114 detects the position of the induction coil 51, it moves the charging cart 12 to put the power supply coil 11 in proximity with the induction coil 51. The position detection controller 114 controls the motors 122 via the moving mechanism 113 to drive the wheels 123 and move the charging cart 120 freely in any direction. The position of the freely moving charging cart 120 can be determined, for example, by issuing a pulse from the power supply coil 11 and receiving that pulse with the position detection coils 130. Specifically, while detecting charging cart 120 position, the position detection controller 114 controls the rotation of the motors 122 that drive the wheels 123 of the charging cart 120 to move the power supply coil 11 to the induction coil 51. However, the mechanism by which the position detection controller moves the charging cart is not limited to that described above.

The charging apparatus 110 can transmit power to charge the internal battery 152 after accurately controlling the power supply coil 11 to a position in close proximity to the induction coil 51. A position detection controller 115 that can accurately detect induction coil 51 position has an AC power source 112 that is a self-excited oscillator circuit. This position detection controller 115 accurately detects power supply coil 11 location from the oscillating frequency of the self-excited oscillator circuit and controls the moving mechanism 113. The position detection controller 115 controls the charging cart 120 moving mechanism 113 to move the power supply coil 11 while detecting the AC power source 112 oscillating frequency. As described previously, if the oscillating frequency of self-excited oscillator circuit is set to have a maximum (or minimum) where the power supply coil 11 and induction coil 51 are closest, the oscillating frequency will drop off (or increase) as the two coils become separated. Accordingly, the position detection controller 115 can move the power supply coil 11 to a position that is closest to the induction coil 51 by controlling the moving mechanism 113 to move the charging cart 120 and stop it at a position where the oscillating frequency is highest (or lowest). Further, the induction coil 51 can continuously send data indicating charging conditions to the charging apparatus 110 by connecting and disconnecting the parallel capacitor 56, and by simply comparing charging conditions for improvement or deterioration, the power supply coil 11 can also be moved to an optimum position.

With the charging apparatus 110 moving mechanism 113 controlled by the position detection controller 114, 115 to put the power supply coil 11 in close proximity to the induction coil 51, AC power is supplied to the power supply coil 11 from the AC power source 112. Power supply coil 11 AC power is transmitted to the induction coil 51 and used to charge the internal battery 152. When full-charge of the battery 152 is detected in the device housing a battery 150, charging is stopped and a full-charge signal is sent to the charging apparatus 110.

The charging apparatus 110 charges the battery 152 inside an electric vehicle 150A, which is the device housing a battery 50, in the following manner.
(1) The electric vehicle 150A is stopped in a specified position in the designated parking area 185. For example, the electric vehicle 150A is stopped with its left and right wheels 187 in contact with left and right wheel chocks 186 disposed in the designated parking area 185.
(2) The location of the induction coil 51 in the electric vehicle 150A parked in the specified position is determined by the position detection controller 114. The position detection controller 114 detects induction coil 51 position with the position detection coils 130 inside the position detection plate 121 disposed under the electric vehicle 150A.
(3) The position detection controller 114, which has detected the position of the induction coil 51, controls the moving mechanism 113 to move the charging cart 120, and position the power supply coil 11 housed in the charging cart 120 in close proximity with the induction coil 51 housed inside the under-surface of the electric vehicle 150A.
(4) The power supply coil 11, which has been moved close to the induction coil 51, is magnetically coupled to the induction coil 51 and transmits AC power to the induction coil 51.
(5) The contactless charging section 60 of the electric vehicle 150A converts induction coil 51 AC power to DC and charges the internal battery 152, which is the driving battery 170, with that DC power.

Efficiency of the power transmission from the power supply coil 11 to the induction coil 51 can be improved by narrowing the gap between the power supply coil 11 and the induction coil 51. Therefore, when the charging cart 120 is moving below the under-surface of the electric vehicle 150A, the gap between the power supply coil 11 and the induction coil 51 is a narrow gap that does not contact the upper surface of the charging cart 120 with the under-surface of the electric vehicle 150A. Preferably, the gap between the upper surface of the charging cart 120 and the under-surface of the electric vehicle 150A is less than or equal to 5cm. However, when the wheels of the charging cart are being driven and the charging cart is moving under the electric vehicle, the upper surface of the charging cart and the under-surface of the electric vehicle can be non-contacting with a gap having some margin. Further, when power is transmitted from the power supply coil to the induction coil, a lift-mechanism can raise the power supply coil to put it in closest proximity with the induction coil for power transmission. When this charging cart completes internal battery charging, the power supply coil is lowered by the lift-mechanism prior to driving the wheels of the charging cart.

The electric vehicle 150A described above, which is the device housing a battery 150, is configured to allow charging from a charging adapter 180 in addition to contactless charging from the charging apparatus 110. The device housing a battery 150 electric vehicle 150A of the figures is provided with charging terminals 172 to connect the charging adapter 180 and charge the driving battery 170, which is the internal battery 152. A charging adapter 180 plug 183 provided at the end of a charging cable 182 is inserted in the electric vehicle 150A charging terminals 172 to charge the driving battery 170 in the electric vehicle 150A.

In the same manner as the previously described device housing a battery 50, when this device housing a battery 150 electric vehicle 150A is in position over the charging apparatus 110 and the charging adapter 180 is connected, the internal battery 152 is charged by either the charging apparatus 110 or the charging adapter 180. Specifically, the device housing a battery 150 has a control circuit 54 provided with a charging apparatus detection section 61 that detects the device housing a battery 150 positioned over the charging apparatus 110, an adapter detection section 62 that detects connection or charging by the charging adapter 180 that connects to the device housing a battery 150 to charge the internal battery 152, and a charging selection section 63 that selects internal battery 152 charging by either the charging apparatus 110 or the charging adapter 180 according to signals from the charging apparatus detection section 61 and the adapter detection section 62. When the device housing a battery 150 is positioned over the charging apparatus 110 and the charging adapter 180 is connected, the control circuit 54 preferably charges the internal battery 152 only with power supplied from the charging adapter 180 and not with power transmitted from the charging apparatus 110. However, when the device housing a battery 150 is positioned over the charging apparatus 110 and the charging adapter 180 is connected, the internal battery 152 can also be charged only with power transmitted from the charging apparatus 110 and not with power supplied from the charging adapter 180.

The charging apparatus 110 described above is provided with a charging cart 120 housing the power supply coil 11, and a position detection plate 121 housing the position detection coils 130 that make up the position detection controller 114. This charging apparatus 110 does not hold the position detection section and the power supply coil in a case or other housing such as in the previously described charging apparatus 10, but rather is made up of a thin position detection plate 121 and a roving charging cart 120 housing the power supply coil 11. Accordingly, the charging apparatus 110 has the characteristic that the position detection plate 121 is a simple, easy to move structure that can be easily set up in the electric vehicle 150A designated parking area 185, and the self-propelled charging cart 120 can be moved freely to put the power supply coil 11 in close proximity with the induction coil 51. However, the charging apparatus can also have an external case that houses the position detection plate and power supply coil and is disposed in the vehicle parking area. Or, the charging apparatus can be buried in a fixed location below the surface of the parking area. In a charging apparatus buried in the parking area, an elevated region is established in a fixed position in the parking area and the position detection controller and power supply coil are housed in the elevated region. When the electric vehicle is parked in a specified position over the elevated region, the power supply coil is moved by the moving mechanism under the induction coil for contactless charging.

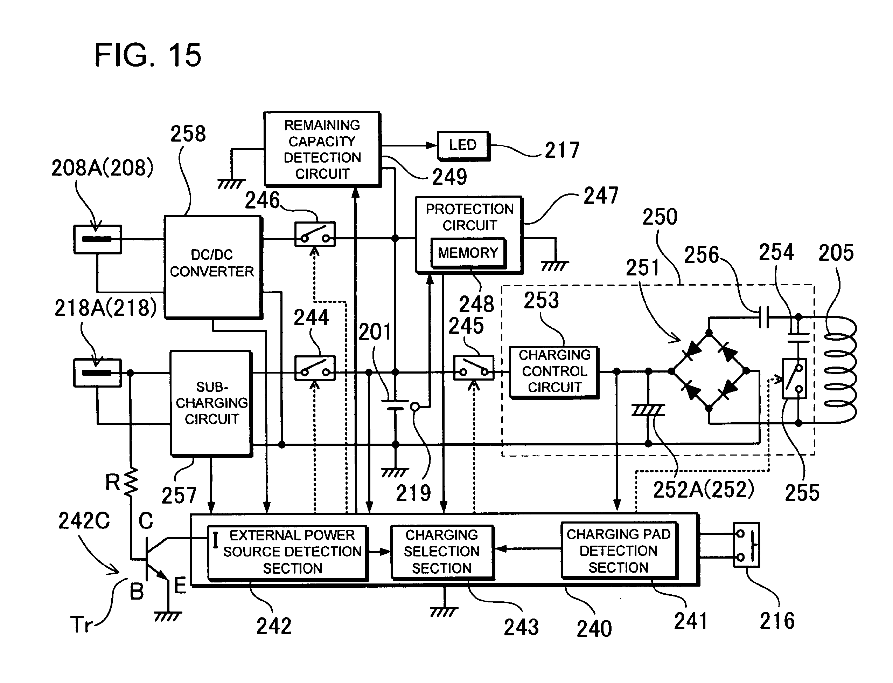

The following describes a device housing a battery that is a battery pack 210 provided with an output connector. Structural components that are the same as those described previously are assigned the same name and their description is abbreviated. The battery pack 210 is placed on a charging apparatus 10 (charging pad) having a transmitting coil 11 that transmits power by magnetic induction. As shown in Fig. 15, the battery pack 210 is provided with a receiving coil 205 that receives power transmitted from the transmitting coil 11, an internal battery 201 that is charged by power induced in the receiving coil 205, an output connector 208 that externally outputs internal battery 201 power as a power supply, a circuit board (not illustrated) that carries a charging circuit 250 that charges the internal battery 201 with power induced in the receiving coil 205, and a casing that holds the circuit board, the receiving coil 205, and the internal battery 201. In addition, the battery pack 210 houses a sub-charging circuit 257 that charges the internal battery 201 by connection to an external power source 220.

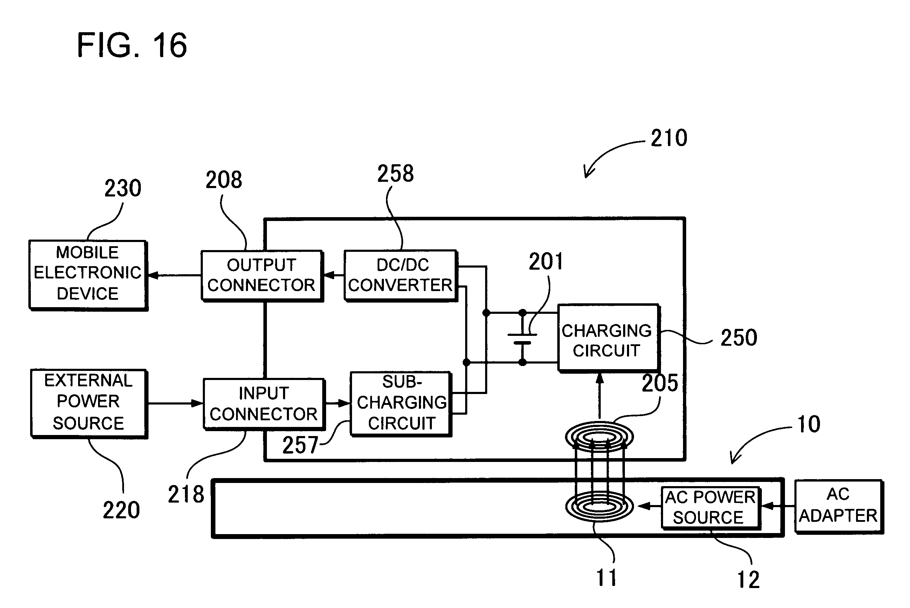

The circuit structure of the battery pack 210 shown in Figs. 15 and 16 is well-known technology, and the battery pack 210 is housed in a plastic casing (not illustrated). Although not illustrated, the receiving coil 205 is disposed inside the bottom surface of the casing to allow it to be put in close proximity with the transmitting coil 11.

### (the receiving coil as an induction coil)

The receiving coil 205 is a planar coil with wire wound spirally in a plane. The planar receiving coil 205 is wound as a single spiral layer or as a plurality of spiral layers, has an overall disk-shape, and has a circular outline. (output connector and input connector)

As shown in Figs. 15 and 16, the battery pack 210 is provided with an output connector 208 to supply power to a mobile electronic device 230. The battery pack 210 of the figures has a universal serial bus (USB) connector 208A as the output connector 208. The USB connector 208A, which is the output connector 208, is a standard USB connector. A push-button switch 216 in an operating section (user interface) is pressed to output power. However, the output connector is not limited to a USB connector. Any type output connector besides a USB connector that can supply power to an externally connected mobile electronic device can be used. For example, a connector that connects to mobile phone (cell phone) power supply terminals can also be used as the output connector. In addition, the battery pack 210 of the figures is provided with an input connector 218 to charge the internal battery 201. The output connector 208 and input connector 218 of the figures are mounted in fixed positions on the circuit board.

As shown in Fig. 15, the circuit board carries a charging circuit 250 that converts receiving coil 205 AC to DC to charge the internal battery 201, a sub-charging circuit 257 (equivalent to the charging circuit 71 in the previous embodiment) that charges the internal battery 201 with power input from an external power source 220, a DC/DC converter 258 to stabilize and output a constant voltage from the charged internal battery 201, and a control circuit 240 (equivalent to the microcomputer 64 in the previous embodiment) to control internal battery 201 charging conditions and output connector 208 discharging conditions.

### (control circuit)

The charging circuit 250 is provided with a rectifying circuit 251 that rectifies AC induced in the receiving coil 205 converting it to DC, a smoothing circuit 252 that is a smoothing capacitor 252A that smoothes ripple current in the DC rectified by the rectifying circuit 251, and a charging control circuit 253 that charges the internal battery 201 with DC smoothed by the smoothing circuit 252. The charging circuit 250 charges the internal battery 201 with appropriate voltage and current. The charging circuit 250 in a battery pack 210 with a lithium ion internal battery 201 has a charging control circuit 253 that is a constant voltage-constant current circuit for charging the internal battery 201 with a constant voltage and a constant current. The charging control circuit in a battery pack with an internal battery such as a nickel hydride battery or alkaline battery is a constant current circuit.

### (sub-charging circuit [equivalent to the charging circuit 71 in the previous embodiment])

The sub-charging circuit 257 charges the internal battery 201 with power input from the external power source 220. In a battery pack with a lithium ion internal battery 201, the sub-charging circuit 257 charges the internal battery 201 via constant voltage-constant current charging. In a battery pack with an internal battery that is a nickel hydride or nickel cadmium battery, the sub-charging circuit charges the internal battery with constant current charging. Further, when the sub-charging circuit 257 detects full-charge of the internal battery 201, it halts charging. The battery pack 210 of the figures is provided with an input connector 218 to input power from the external power source 220 to the sub-charging circuit 257. The input connector 218 shown in the figures is a mini- or micro-USB connector 218A. However, an input connector that can input power from an external power source other than a mini- or micro-USB connector can also be used. For example, a connector such as the power receptacle for an adapter jack connected to an AC adapter can also be used.

When the external power source 220 (equivalent to the charging adapter 80 in the previous embodiment) is connected to the input connector 218, the sub-charging circuit 257 can detect that connection from input current or voltage. This is because power is supplied from the external power source 220 to the battery pack 210 when the external power source 220 is connected. When power is input from the external power source 220, the sub-charging circuit 257 charges the internal battery 201 with power from the external power source 220. However, instead of providing a special-purpose input connector dedicated to battery charging, the output connector can serve both to input external power and to output power to the outside. For example, this type of battery pack has the output connector connected to the sub-charging circuit and the DC/DC converter through switches, and the output connector is connected to either the sub-charging circuit or the DC/DC converter by controlling the switches.

When an external power source 220 is connected to the input connector 218 and the battery pack is placed on the charging apparatus 10, the battery pack is configured to charge the internal battery 201 by either the external power source 220 or the charging apparatus 10.The control circuit 240 in Fig. 15 is provided with a charging pad detection section 241 (equivalent to the charging apparatus detection section 61 in the previous embodiment) that detects placement of the battery pack 210 on the charging apparatus 10, an external power source detection section 242 (equivalent to the adapter detection section 62 in the previous embodiment) that detects connection or charging by an external power source 220, and a charging selection section 243 (equivalent to the charging selection section 63 in the previous embodiment) that selects internal battery 201 charging by either the charging apparatus 10 or the external power source 220 according to signals from the charging pad detection section 241 and the external power source detection section 242.

When the battery pack 210 is placed on the charging apparatus 10 and the external power source 220 is also connected, the control circuit 240 through the charging selection section 243 controls internal battery 201 charging with either the charging apparatus 10 or the external power source 220. In the case where the battery pack 210 is placed on the charging apparatus 10 and the external power source 220 is connected, namely, when the internal battery 201 can be charged by either the charging apparatus 10 or the external power source 220, the control circuit 240 preferably charges the internal battery 201 only with power supplied from the external power source 220 and not with power transmitted from the charging apparatus 10. However, when the battery pack 210 is placed on the charging apparatus 10 and the external power source 220 is connected, the internal battery 201 can also be charged only with power transmitted from the charging apparatus 10 and not with power supplied from the external power source 220. In that case, the switch 244 is controlled OFF to cut-off power from the sub-charging circuit 257.

The control circuit 240 charging pad detection section 241 detects placement of the battery pack 210 on the charging apparatus 10, or charging by the charging apparatus 10. As its power supply voltage, the control circuit 240 operates by power output from the rectifying circuit 251, which converts receiving coil 205 output to DC, and does not operate by power supplied from the internal battery 201. Specifically, the control circuit 240 does not consume operating power from the internal battery 201, but rather operates on power supplied by magnetic induction from the charging apparatus 10. Accordingly, when the battery pack 210 is placed on the charging apparatus 10, the control circuit 240 is activated and becomes operational. The charging pad detection section 241 detects placement of the battery pack 210 on the charging apparatus 10 by detecting control circuit 240 activation. This charging pad detection section 241 can detect placement on the charging apparatus 10 with a simple circuit structure. However, the charging pad detection section can also receive a signal from charging pad to detect placement on the charging pad.

The external power source detection section 242 detects external power source 220 connection or internal battery 201 charging by the external power source 220. The external power source detection section 242 detects external power source 220 connection or charging while contactless charging is in a halted state. Contactless charging is halted by switching OFF the switch 245 connected between the charging circuit 250 and the internal battery 201. The control circuit 240 holds the switch 245 OFF to halt contactless charging for the time period when external power source 220 connection or charging is being detected. The following describes the details of detecting external power source 220 connection with the external power source detection section 242. The external power source detection section 242 (equivalent to the adapter detection section 62 in the previous embodiment) is provided with an adapter detection circuit 242C. The adapter detection circuit 242C is activated by voltage applied by connecting the external power source 220, which is the charging adapter, and issues a connection signal to the external power source detection section 242. The adapter detection circuit 242C has a switching device SW connected between the external power source detection section 242 input port I and ground, and the switching device SW is activated by voltage applied by connecting the external power source 220. Voltage application due to external power source 220 connection puts the switching device SW in a conducting state, and a LOW voltage level is applied as a connection signal at the input port I of the external power source detection section 242. Specifically, as shown in Fig. 15, an npn bipolar transistor Tr has its base connected through a current-limiting resistor R to a positive-side line from the external power source 220, its emitter grounded, and its collector connected to the input port I of the external power source detection section 242. In this configuration, when the external power source 220 is connected, a HIGH voltage level is applied to the base of the transistor Tr, the transistor Tr conducts between its collector and emitter, and the potential at the input port I changes from a HIGH level to a LOW level. This LOW voltage level at the input port is transmitted to the external power source detection section 242 as a connection signal, and the external power source detection section 242 detects that signal to detect external power source 220 connection.

When the control circuit 240 charging pad detection section 241 detects placement on the charging apparatus 10 and the external power source detection section 242 detects external power source 220 connection or charging, the charging selection section 243 sends a halt-charging-signal to the charging apparatus 10 to halt charging by the charging apparatus 10, and charges the internal battery 201 with the external power source 220. When the battery pack 210 is not placed on the charging apparatus 10 and the external power source 220 is connected, the control circuit 240 charges the internal battery 201 with the external power source 220. When the battery pack 210 is not placed on the charging apparatus 10, there is no need to detect external power source 220 connection or charging with the external power source detection section 242. This is because the internal battery 201 can be charged under ideal conditions by the external power source 220. Since the external power source detection section 242 only detects external power source 220 connection or charging when the battery pack 210 is placed on the charging apparatus 10, it is not necessary for the external power source detection section 242 to detect external power source 220 connection or charging when the battery pack 210 is not placed on the charging apparatus 10. Accordingly, a battery pack 210 that operates the control circuit 240 with power transmitted from the charging apparatus 10 only activates the control circuit 240 to detect external power source 220 connection and charging. However, the control circuit 240 charging pad detection section 241 and external power source detection section 242 can also be continuously operated to detect placement on the charging apparatus 10 and external power source 220 connection and charging. When this battery pack 210 is placed on the charging apparatus 10 and the external power source 220 is not connected, the control circuit 240 charges the internal battery 201 from the charging apparatus 10, and when the battery pack 210 is not placed on the charging apparatus 10 and the external power source 220 is connected, the control circuit 240 charges the internal battery 201 from the external power source 220.

The control circuit 240 in Fig. 15 holds a signal switch 255, which is connected in series with a parallel capacitor 254 connected in parallel with the receiving coil 205, ON to send a halt-charging-signal to the charging apparatus 10. The charging apparatus 10 detects connection of the parallel capacitor 254 to the receiving coil 205 and stops delivering AC to the transmitting coil 11. The control circuit 240 can also switch the signal switch 255 ON and OFF in a prescribed manner (instead of holding it in the ON state) to convey connection of the external power source 220 to the charging apparatus 10. In that case, the charging apparatus 10 detects ON and OFF switching of the signal switch 255 to detect external power source 220 connection and stops delivering AC to the transmitting coil 11. A system that stops the charging apparatus 10 from charging the internal battery 201 by halting the input of AC to the transmitting coil 11 not only reduces unnecessary power consumption, but also prevents detrimental heating of the battery pack 210 by power output from the transmitting coil 11. However, when external power source 220 connection or charging is detected, AC output to the transmitting coil 11 does not necessarily have to be stopped, and the control circuit 240 in the battery pack 210 can also turn OFF the switch 245 to cut-off charging current to the internal battery 201 and stop charging by the charging apparatus 10.

The rectifying circuit 251 rectifies AC power induced in the receiving coil 205 and outputs the rectified power to the control circuit 240. The battery pack 210 of the figures has a series capacitor 256 connected between the receiving coil 205 and the rectifying circuit 251, and AC power induced in the receiving coil 205 is input to the rectifying circuit 251 through that series capacitor 256. The series capacitor 256 forms a series resonant circuit with the receiving coil 205 to efficiently input AC power induced in the receiving coil 205 to the rectifying circuit 251. Accordingly, the capacitance of the series capacitor 256 is selected to combine with the receiving coil 205 inductance for an overall impedance having a minimum near the frequency of the induced AC power.

### (DC/DC converter)

The DC/DC converter 258 stabilizes and outputs a constant voltage from the charged internal battery 201. In the circuit diagram of Fig. 15, a discharge switch 246 connected between the internal battery 201 and the DC/DC converter 258 is mounted on the circuit board (not illustrated). The discharge switch 246 is controlled ON and OFF by the control circuit 240. The control circuit 240 switches the discharge switch 246 ON and OFF according to signals from the push-button switch 216, which is the operating section (user interface). When an ON signal is input from the push-button switch 216 for a given length of time, the control circuit 240 switches the discharge switch 216 ON to output power from the internal battery 201 to the DC/DC converter 258. At that time, the DC/DC converter 258 is activated and supplies stabilized power to the output connector 208 connected to its output-side. If a mobile electronic device connected to the output connector 208 is disconnected from the output connector 208, the control circuit 240 detects disconnection by the output current. This is because output current drops to 0A when the mobile electronic device is disconnected.

Further, as shown in Fig. 15, a protection circuit 247 that controls internal battery 201 charging and discharging is mounted on the circuit board (not illustrated). The protection circuit 247 detects battery temperature and voltage and controls battery charging and discharging. Battery temperature is detected by a temperature sensor 219 attached in a thermally coupled manner to the surface of the internal battery 201. The temperature sensor 219 is connected to the protection circuit 247. The protection circuit 247 is provided with memory 248 that stores data for limiting battery charging and discharging current according to temperature. Memory 248 stores allowable current corresponding to battery temperature. Allowable current is the maximum current allowed to flow at a given temperature, and an operating current lower than that current is used. The protection circuit 247 protects the battery by controlling battery charging and discharging current below the allowable current corresponding to battery temperature. In addition, the protection circuit 247 can store the maximum and minimum temperatures for battery charging and discharging, and can control charging and discharging to allow operation between the maximum and minimum temperatures. The maximum and minimum temperatures are set to the most appropriate values for the type of battery. For example, for a lithium ion battery, the maximum temperature can be approximately 60°C to 70°C and the minimum temperature can be approximately -10°C to 0°C.

Further, the protection circuit 247 can control charging and discharging by detecting the voltage of the internal battery 201. The protection circuit 247 stops charging when battery voltage rises to a maximum voltage, and stops discharging when battery voltage drops to a minimum voltage.

If the protection circuit 247 shown in Fig. 15 detects abnormal battery temperature or voltage, it controls the control circuit 240 to stop charging the internal battery 201 and controls the discharge switch 246 OFF to stop discharging the internal battery 201.

The battery pack shown in Fig. 15 also houses a remaining capacity detection circuit 249 to detect the remaining capacity of the internal battery 201. The remaining capacity detection circuit 249 computes remaining capacity from internal battery 201 voltage and current, and indicates the remaining capacity by the illumination color or the number of devices illuminated in a display of light emitting diodes (LEDs) 217. When an ON signal is received from the push-button switch 216, the remaining capacity detection circuit 249 illuminates the LEDs 217 for a given time period to indicate the remaining capacity.

The push-button switch 216 can also switch the DC/DC converter 258 to the operating state. In a battery pack 210 where both remaining capacity is indicated and the DC/DC converter 258 is switched to the operating state by push-button switch 216 ON and OFF signals, remaining capacity can be indicated by pressing the push-button switch 216 for a short period and the DC/DC converter 258 can be switched to the operating state by pressing the push-button switch 216 for a longer period. If the signal input from the push-button switch 216 is judged to be longer than a set period, the DC/DC converter 258 is switched to the operational state. Since the DC/DC converter 258 remains in an inactivated state if the push-button switch 216 is not held pressed for a long period, unnecessary battery power consumption can be prevented in a battery pack 210 with no mobile electronic device 230 connected to the output connector 208. This is because the DC/DC converter 258 consumes power in the operational state even when no mobile electronic device 230 is connected as a load.

Further, the control circuit detects full-charge of the internal battery 201 and stops internal battery 201 charging. When full-charge of the internal battery 201 is detected, a signal indicating full-charge is sent to the charging apparatus 10. The charging apparatus 10 detects the full-charge signal and halts charging.

It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the spirit and scope of the invention as defined in the appended claims.

## Claims

1. A device housing a battery and charging apparatus;
the device housing a battery (50, 150) comprising:
an internal battery (52, 152, 201);
charging terminals (72, 172) that connect with a charging adapter (80, 180) to charge the internal battery (52, 152, 201); and
a contactless charging section (60) for contactless charging of the internal battery (52, 152, 201) by magnetically coupling with the charging apparatus (10, 110),
wherein the charging apparatus (10, 110) performs contactless charging by magnetically coupling with the device housing a battery (50, 150) placed on the charging apparatus (10, 110),
**characterized in that:**
the device housing a battery (50, 150) further comprising:
a charging apparatus detection section (61) that detects placement on the charging apparatus (10, 110);
an adapter detection section (62) that detects charging adapter (80, 180) connection or charging; and
a charging selection section (63, 243) that selects internal battery (52, 152, 201) charging by either the charging apparatus (10, 110) or the charging adapter (80, 180) according to signals from the charging apparatus detection section (61) and the adapter detection section (62), and
wherein when the device housing a battery (50, 150) is placed on the charging apparatus (10, 110) and the charging adapter (80, 180) is connected, the charging selection section (63, 243) controls either one of the charging apparatus (10, 110) or the charging adapter (80, 180) to charge the internal battery (52, 152, 201).

2. The device housing a battery and charging apparatus as cited in claim 1 wherein when the device housing a battery (50, 150) is placed on the charging apparatus (10, 110) and the charging adapter (80, 180) is connected, the charging selection section (63, 243) charges the internal battery (52, 152, 201) with only the charging adapter (80, 180) output.

3. The device housing a battery and charging apparatus as cited in claim 1 or 2 wherein the device housing a battery (50, 150) is provided with a charging apparatus detection section (61) equipped with a microcomputer (64) that is operated by power output from the contactless charging section (60) to control contactless charging of the internal battery (52, 152, 201); and with the microcomputer (64) in the operating state due to power supplied from the charging apparatus (10, 110), the charging apparatus detection section (61) detects the charging status of the charging apparatus (10, 110).

4. The device housing a battery and charging apparatus as cited in any one of the claims 1-3, wherein the adapter detection section (62) detects charging adapter (80, 180) connection or charging when contactless charging is halted and at least one of the following parameters is detected:
voltage of a switching device (78A) which is a battery protection device (78) inside the device housing a battery (50, 150);
voltage of the internal battery (52, 152, 201);
voltage of a temperature sensor (59, 219) inside the device housing a battery (50, 150);
signal input from the charging adapter (80, 180);
voltage rise in the internal battery (52, 152, 201); and
temperature rise in the internal battery (52, 152, 201).

5. The device housing a battery and charging apparatus as cited in any one of the claims 1-4 wherein the device housing a battery (50, 150) is provided with a timer (67) to set a time period to halt charging by the charging apparatus (10, 110), and the adapter detection section (62) detects charging adapter (80, 180) connection or charging during the set time period.

6. The device housing a battery and charging apparatus as cited in any one of the claims 1-5 wherein the adapter detection section (62) is provided with a first charging current detection circuit (68) that detects internal battery (52, 152, 201) charging current, and a second charging current detection circuit (69) that detects charging current output from the charging apparatus (10, 110); and charging by the charging adapter (80, 180) is detected from the difference between the charging current detected by the first charging current detection circuit (68) and the second charging current detection circuit (69).

7. The device housing a battery and charging apparatus as cited in any one of the claims 1-5 wherein a diode (75) is provided between the charging adapter (80, 180) and the internal battery (52, 152, 201), and the adapter detection section (62) detects the adapter-side diode (75) voltage to detect charging by the charging adapter (80, 180).

8. The device housing a battery and charging apparatus as cited in any one of the claims 1-7 wherein the adapter detection section (62) detects charging adapter (80, 180) connection or charging and sends a signal to the charging apparatus (10, 110) to halt charging, or stops internal battery (52, 152, 201) charging by the contactless charging section (60).

9. The device housing a battery and charging apparatus as cited in any one of the claims 1-3 wherein the adapter detection section (62) is provided with an adapter detection circuit (242C) activated by voltage applied by connecting the charging adapter (80, 180), and the adapter detection circuit (242C) issues a connection signal to the adapter detection section (62) to detect charging adapter (80, 180) connection.

10. The device housing a battery and charging apparatus as cited in claim 9 wherein the adapter detection circuit (242C) has a switching device connected between the adapter detection section (62) input port and ground; the switching device is activated by voltage applied by connecting the charging adapter (80, 180) putting the switching device in the conducting state; and a LOW voltage level is applied at the input port as a connection signal to detect charging adapter (80, 180) connection.
